(19) Europäisches Patentamt
European Patent Office
Office européen des brevets

(11) **EP 3 029 439 B1**

(12) **EUROPÄISCHE PATENTSCHRIFT**

(45) Veröffentlichungstag und Bekanntmachung des Hinweises auf die Patenterteilung:
**23.06.2021   Patentblatt 2021/25**

(51) Int Cl.:
**G01J 3/28** *(2006.01)*          **G01J 3/42** *(2006.01)*
**G01N 21/35** *(2014.01)*

(21) Anmeldenummer: **14196016.1**

(22) Anmeldetag: **03.12.2014**

(54) **System zur Auswertung von Reflektanzspektren und Verfahren zur Bestimmung von charakteristischen Absorptionsmerkmalen in Reflektanzspektren**

System for the evaluation of reflectance spectrums and method for the determination of characteristic absorption features in reflectance spectrums

Système d'évaluation de spectres de réflectance et procédé de détermination de propriétés d'absorption caractéristiques dans des spectres de réflectance

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.06.2016   Patentblatt 2016/23**

(73) Patentinhaber: **Helmholtz-Zentrum Potsdam - Deutsches GeoForschungsZentrum GFZ Stiftung des Öffentlichen Rechts des Lands Brandenburg 14473 Potsdam (DE)**

(72) Erfinder:
• **Mielke, Christian**
  **14478 Potsdam (DE)**
• **Rogass, Christian**
  **14469 Potsdam (DE)**
• **Boesche, Nina Kristine**
  **14057 Berlin (DE)**

(74) Vertreter: **Hertin und Partner Rechts- und Patentanwälte PartG mbB Kurfürstendamm 54/55 10707 Berlin (DE)**

(56) Entgegenhaltungen:
• Roger N Clark ET AL: "N88-13170 AUTOMATIC CONTINUUM ANALYSIS OF REFLECTANCE SPECTRA", , 1. Januar 1987 (1987-01-01), XP055192721, Gefunden im Internet: URL:http://ntrs.nasa.gov/archive/nasa/casi .ntrs .nasa.gov/19880004388.pdf [gefunden am 2015-06-01]
• PIECH ET AL: "Symbolic representation of hyperspectral data", APPLIED OPTICS, OPTICAL SOCIETY OF AMERICA, WASHINGTON, DC; US, Bd. 26, Nr. 18, 1. Januar 1987 (1987-01-01), Seiten 4018-4026, XP002534020, ISSN: 0003-6935, DOI: 10.1364/AO.26.004018
• R KOKALY: "Spectroscopic Determination of Leaf Biochemistry Using Band-Depth Analysis of Absorption Features and Stepwise Multiple Linear Regression", REMOTE SENSING OF ENVIRONMENT, Bd. 67, Nr. 3, 1. März 1999 (1999-03-01), Seiten 267-287, XP055192741, ISSN: 0034-4257, DOI: 10.1016/S0034-4257(98)00084-4
• None

**Beschreibung**

Die Erfindung betrifft ein System zur Auswertung von Reflektanzspektren durch die Bestimmung charakteristischer Absorptionsmerkmale eines Eingangs-Reflektanzspektrums und ein Verfahren zur Bestimmung von charakteristischen Absorptionsmerkmalen aus Reflektanzspektren. Erfindungsgemäße Systeme und Verfahren können zur Auswertung von Reflektanzspektren im Bereich der geographischen Fernerkundung oder in der abbildenden Spektroskopie eingesetzt werden. Aufgrund der universellen Anwendungsmöglichkeiten spektroskopischer Methoden ist aber auch die Anwendung im Bereich der Materialerkennung in der Mineralogie, Geologie, Chemie oder in der Abfallwirtschaft zur Stofftrennung oder der Materialforschung zur Materialcharakterisierung vorstellbar.

Stand der Technik

Das erfindungsgemäße System und das erfindungsgemäße Verfahren können beispielsweise im Bereich der Fernerkundung eingesetzt werden. Mit dem Begriff der Fernerkundung werden Verfahren zur Gewinnung von Informationen über die Erdoberfläche oder anderer, nicht direkt zugänglicher Objekte bezeichnet. Die Methoden der Fernerkundung umfassen die Aufnahme und Interpretation von Daten, wobei als Informationsträger sowohl reflektierte elektromagnetische Strahlung, als auch solche elektromagnetische Strahlung Verwendung findet, die von den zu untersuchenden Objekten selbst emittiert wird. Das charakteristische Merkmal der Fernerkundung besteht darin, dass die zu untersuchenden Objekte, beispielsweise die Erdoberfläche, aber beispielsweise auch die Erdatmosphäre, berührungs- und zerstörungsfrei untersucht werden. Dieser Vorteil trifft auch auf die weiteren Anwendungsbereiche der Erfindung zu, die in den Bereichen der Mineralogie, Geologie, Chemie, Ökologie, Landwirtschaft (precision farming), Biologie, der Abfallwirtschaft oder der Materialforschung angesiedelt sind.

In diesen Anwendungsfeldern und in der Fernerkundung werden üblicherweise Sensoren der folgenden Sensortypen verwendet: Wärmebildkameras, Radarsysteme, Mikrowellenradiometer, Lasersensoren, Multispektralkameras und Hyperspektralsensoren.

Die Herausforderung bei der Auswertung von Messdaten, die von einem Hyperspektralsensor erfasst werden, besteht darin, eine große Anzahl von Wellenlängen-Kanälen auszuwerten, die für den Menschen nicht wahrnehmbar sind, da der Mensch lediglich in der Lage ist, drei Wellenlängen- oder Farb-Kanäle auszuwerten, nämlich die Wellenlängen der Grundfarben rot, grün und blau. Die durch die Hyperspektralsensoren aufgenommenen Daten sind also insofern schwierig auszuwerten, da sie in der Regel dem menschlichen Geist nicht zugänglich sind, da ihm der Erfahrungsschatz im Umgang mit diesen Daten fehlt. Betrachtet ein Mensch beispielsweise ein grünes Blatt an einem Baum, so kann das menschliche Gehirn aufgrund des Umfeldes und aufgrund seiner Erfahrung das Blatt auch weiter als solches erkennen, auch wenn sich eine Wolke vor die Sonne schiebt und das Blatt aufgrund der fehlenden Sonneneinstrahlung ein verändertes Strahlungsspektrum abgibt.

Betrachtet ein Mensch beispielsweise das Blatt einer Pflanze, so kann er den Gesundheitszustand der Pflanze nur aufgrund der ihm vorliegenden Informationen aus dem rot-grün-blau-Spektrum beurteilen. Aufgrund seines Erfahrungswissens wird der Betrachter ein gelbes Blatt dahingehend beurteilen, dass er es für krank hält. Mit Hilfe der hyperspektralen Fernerkundung, die auch den Bereich des für den Menschen nicht sichtbaren nahen Infrarots im Wellenlängenbereich von 650 - 1000 nm umfasst, ist es möglich, eine Schädigung von Pflanzen früher festzustellen.

Weiter sind beispielsweise die Bestimmungen verschiedener Materialien möglich. So ist zum Beispiel eine Unterscheidung von dolomithaltigem Marmor gegenüber kalzithaltigem Marmor in einem Steinbruch berührungs- und zerstörungsfrei im Wellenlängenbereich von 2000 - 2500 nm möglich. Der Geologe im Feld muß dahingegen auf den klassischen Säuretest mit Salzsäure (HCl) zurückgreifen, um den Intensitätsgrad der Reaktion des zu untersuchenden Materials mit der Säure zu beurteilen. Eine starke Reaktion zwischen Salzsäure und dem zu untersuchenden Material deutet dabei auf Kalzit hin, während eine schwache Reaktion für Dolomit sprechen würde.

Diesen Erfahrungsschatz, auf den das menschliche Gehirn bei der Auswertung von Reflexionsspektren zurückgreift, versucht man bei der Auswertung von Hyperspektraldatensätzen durch den Einsatz von Datenbanken oder Bibliotheken zu komplementieren. Üblicherweise werden durch Hyperspektralmessungen Reflektanzdaten in Abhängigkeit von der eingestrahlten Wellenlänge erhalten. Die eingestrahlte elektromagnetische Strahlung stellt in der Regel ein kontinuierliches Spektrum dar, bei dem Strahlung aller in einem festgelegten Wellenlängenbereich vorkommender Wellenlängen von einer Strahlungsquelle emittiert wird.

Je nachdem, welcher Anteil der eingestrahlten elektromagnetischen Strahlung von dem zu untersuchenden Objekt absorbiert wird, wird der entsprechenden Wellenlänge im Reflexionsspektrum, das auf der y-Achse eines Spektrums aufgetragen wird, ein großer oder kleiner Wert zugeordnet. Ein hoher Reflexionswert steht dabei für eine geringe Absorption, während ein kleiner Reflexionswert mit einer großen Absorption verbunden ist. Diese Daten erlauben dann Aussagen beispielsweise über die mineralogische Zusammensetzung des Erdbodens, über die Beschaffenheit des Erdbodens, über die Vegetation und den Zustand dieser Vegetation.

Hyperspektralsensoren können beispielsweise auf Satelliten, Fluggeräten, Drohnen oder Ballons installiert sein. Hyperspektralsensoren können jedoch auch in Erkennungs- und Untersuchungsvorrichtungen vorgesehen sein, mit denen beispielsweise Müll getrennt oder die chemische Zusammensetzung von Bodenproben ermittelt wird.

Das Ziel bei der Auswertung der beispielsweise durch Hyperspektralmessungen erhaltenen Reflexions- oder Absorptionsspektren ist es, in dem Spektrum charakteristische Muster oder Merkmale zu erkennen. Diese Muster werden beispielsweise einzelnen chemischen Elementen, kristallographischen Orientierungen oder von chemischen Stoffen oder den Anregungszuständen von Atomen und Molekülen zugeordnet. Diese charakteristischen Merkmale werden im Sinne der vorliegenden Erfindung auch als charakteristische Absorptionsmerkmale oder charakteristische Absorptionsbanden bezeichnet, wobei die Begriffe in der Anmeldung synonym verwendet werden.

Im Sinne dieser Anmeldung ist ein charakteristisches Merkmal ein Wellenlängenintervall, das ein lokales Minimum in einem Reflektanzspektrum darstellt. Ein solches charakteristisches Merkmal wird auch als Konkavität im Reflektanzspektrum bezeichnet. Damit verbunden ist eine starke Absorption des untersuchten Materials in diesem Spektralbereich. Als lokal werden diese Minima bezeichnet, da sich ein Reflektanzspektrum in mehrere Teilbereich unterteilen läßt, wobei konkave Teilbereiche des Spektrums lokale Minima aufweisen, während konvexe Teilbereiche lokale Maxima aufweisen. Konkave Teilbereiche haben die Gestalt eines Tals in einem Reflektanzspektrum, während konvexe Bereiche durch eine kuppenförmige Gestalt beschrieben werden können. Die im Rahmen dieser Anmeldung verwendete Definition der Begriffe "konvex" und "konkav" orientiert sich somit an den aus der Optik bekannten Linsenformen, wobei eine konkave Linse eine Zerstreuungslinse, wobei mindestens eine der beiden Linsenseiten eine Wölbung nach innen aufweist. Entsprechend bezeichnet der Begriff "konvex" im Kontext dieser Anmeldung eine Wölbung einer Kurve nach außen in Analogie zu einer Sammellinse, die über mindestens eine Linsenseite verfügt, die eine Wölbung nach außen aufweist.

Die Stellen im Reflektanzspektrum, an der ein konvexer Bereich in einen konkaven Bereich übergeht, werden im Kontext dieser Anmeldung als Stützstellen bezeichnet. "Stellen" bezeichnen in dieser Anmeldung einen Wert auf der horizontalen x- oder Wellenlängen-Achse des Reflektanzsspektrums. Punkte dahingegen umfassen eine x- und eine y-Koordinate und werden in der Schreibweise (x/y) dargestellt.

Die Bestimmung der charakteristischen Absorptionsmerkmale wird im Kontext dieser Anmeldung auch als Isolation, Detektion, Ermittlung oder Extraktion dieser Merkmale bezeichnet, wobei die Begriffe in dieser Anmeldung synonym verwendet werden.

Im Stand der Technik sind zur Auswertung von Reflektanzspektren sogenannte Experten-Systeme bekannt, bei denen unbekannte Spektren mit bekannten und in Bibliotheken und Datenbanken hinterlegten Spektren verglichen werden. Grundlage des Vergleiches zwischen dem unbekannten Spektrum und den bekannten Daten sind die charakteristischen Absorptionsmerkmale, welche in den bekannten Bibliotheksspektren durch Expertenwissen festgelegt wurden. Der Vergleich zwischen unbekanntem Spektrum und den bekannten Literaturspektren beinhaltet den Abgleich der Wellenlängenbereiche der charakteristischen Absorptionsbande, welche in Bibliotheken und Datenbanken hinterlegt sind, mit dem gleichen Wellenlängenbereich im unbekannten Spektrum.

Diese in Bibliotheken und Datenbanken hinterlegten Daten werden auf Basis von geochemischem und spektroskopischen Expertenwissens definiert. Bekannte Vertreter von Expertensystemen sind der *United States Geological Survey (USGS Tetracorder)* und der *USGS Material Identification and Characterisation Algorithm (MICA).* Darüber hinaus gibt es das *Environmental Mapping and Analyse Programm (EnMAP),* eine deutsche hyperspektrale Satellitenmission, welche die Entwicklung des *EnMAP Geological Mapper (EnGeoMAP)* fördert. Diesen Expertensystemen ist gemein, dass die Bestimmung der charakteristischen Absorptionsmerkmale auf Grundlage von a *priori-*Wissen aus der *Tetracorder Feature-*Datenbank und der *USGS Digital Spectral-*Bibliothek erfolgt. Diese Bibliotheken und Datenbanken entstanden unter Mithilfe von Experten der bildgebenden Spektroskopie des *USGS.*

Die Verwendung solcher Expertensysteme stellt die Grundlage eines beträchtlichen Teils der bekannten Verfahren zur Auswertung von Reflektanz- oder Absorptionsspektren dar. Nachteilig an diesem Stand der Technik ist, dass chemische Stoffe oder Elemente, die nicht in diesen Bibliotheken und Datenbanken erfasst sind, nicht oder nur unzureichend in unbekannten Spektren erfasst werden, da ein Materialvergleich nur auf Grundlage von zuvor durch Expertenwissen festgelegten charakteristischen Absorptionsbanden in einem vorher spektroskopisch und chemisch erfassten Material erfolgen kann.

Zur Verbesserung der im Stand der Technik bekannten Auswertungsmethoden für Hyperspektraldaten wurden verschiedene Verfahren vorgeschlagen. Die Methode des spektralen *Fingerabdrucks* betrifft die Bestimmung von charakteristischen Absorptionsmerkmalen, wobei die Faltung einer Filterbank mit Gauß-Filtern variabler Breite mit dem Spektrum genutzt wird, um eine Nachbildung der Albedo zu erreichen. Dabei wird die Antwort eines generischen Sensors simuliert, der mittels spektral breitbandiger Filter die Albedo des Spektrums registriert. Die Bestimmung der charakteristischen Absorptionsmerkmale erfolgt durch Nachverfolgung stabiler Absorptionsbanden und Schulterbereiche, wobei diese Nachverfolgung auch als Skalen-Raum-Filterung bezeichnet wird. Nachteilig an diesem Stand der Technik ist allerdings, dass nur unbefriedigende Ergebnisse bei der Auswertung komplexer, beispielsweise zusammengesetzter oder durch Überlagerung entstandener Absorptionsmerkmale erreicht werden. Diese Unzulänglichkeiten betreffen beispielsweise das Kaolinit-Doppelmerkmal, welches von dieser Methode nicht erfasst wird.

Weiter bekannt sind Verfahren, wie beispielsweise die *konvexe Hülle* oder die *Alpha Shapes.* Das Verfahren der *konvexen Hülle* stammt aus dem Bereich der Computergraphik und wird verwendet, um den kürzesten Perimeter um einen Punktdatensatz zu ermitteln. Um die charakteristischen Absorptionsmerkmale eines Spektrums zu bestimmen, wird bei den Spektren implizit ein konvexer Kurvenverlauf vorausgesetzt. Durch diese Annahme wird bei der Auswertung von Reflektanzspektren, die im Rahmen der Fernerkundung zur Untersuchung der Erdoberfläche aufgenommen wurden, ein wichtiges charakteristisches Merkmal, das üblicherweise im Bereich von 670 nm liegt nicht vollständig erfasst. Der Grund dafür ist, dass das linke lokale Maximum dieses charakteristischen Absorptionsmerkmals, der sogenannte "green peak", nicht von der konvexen Hülle erfasst wird. Bei der konvexen Hülle wird nur das rechte lokale Maximum erfasst. Bei diesem handelt es sich um ein Absorptionsmerkmal, das typisch für Vegetation ist und nach dem starken Anstiegs der Reflektion im nahen Infrarotbereich als "red edge" bezeichnet wird.

Insbesondere eine Unterscheidung verschiedener Vegetationstypen auf Grundlage der mit der Methode der *konvexen Hülle* ausgewerteten Reflektanzspektren ist aufgrund des mit dieser Methode nicht bestimmbaren "green peak" und der damit einhergehenden Ungenauigkeit bei der Bestimmung der für Vegetation charakteristischen Absorptionsbanden, dadurch besonders erschwert. Auch andere wichtige Merkmale, beispielsweise eines im Bereich von 1200 nm, wird von der Methode der konvexen Hülle nicht vollständig erfasst.

Um das Problem der Nichterfassung von Konkavitäten in Punktdatensätzen zu umgehen, wurde das Verfahren der *Alpha Shapes* entwickelt, wodurch erreicht wird, dass nachgebildete Albedokurven näher am Reflektanzspektrum verlaufen. Dadurch wird eine realistischere Nachbildung der tatsächlichen Albedo erreicht. Allerdings ist auch die Methode der *Alpha Shapes* nicht geeignet, um die Vegetations-merkmale bei 670, beziehungsweise 1200 nm vollständig zu erfassen.

Andere Auswertungsmethoden versagen beispielsweise beim Auffinden von feinen Absorptionsmerkmalen innerhalb großer Wölbungen, wie dies beispielsweise bei Seltenen Erden-Mineralien der Fall ist.

Piech et al. 1987 offenbart die Auswertung von hyperspektralen Daten, bei der *scale base techniques* angewendet werden (Piech et al. 1987 Symbolic representation of hyperspectral data, Applied Optics, Optical Society of America, 1. Januar 1987).

Die R. Kokaly et al. 1999 offenbart ein spektroskopisches Bestimmungsverfahren für biochemische Vorgänge in Blättern unter Verwendung einer Band-Depth-Analyse von Absorptionsspektren (R. Kokaly et al., Spectroscopic Determination of Leaf Biochemistry Usind Band-Depth Analysis of Absorption Features and Stepwise Multiple Linear Regression, Remote sensing of Environment Bd. 67, Nr. 3. Seiten 267-287, 1. März 1999

Aus Roger N. Clark et al. 1987 ist eine automatische und kontinuierliche Analyse von Reflektanzspektren unter Bestimmung einer segmentierten oberen Hülle bekannt (Roger N. Clark et al "N88-13170 Automatic continuum analysis of reflectance spectra" 1. Januar 1987, XP055192721). Hierbei wird die obere Hülle dadurch bestimmt, dass zunächst das Maximum des Spektrums ermittelt wird und Liniensegmente bestimmt werden, sodass alle Punkte des Spektrums auf oder unter der Hülle liegen. Anschließend werden durch ein iteratives Verfahren neue lokale Maxima ermittelt, welche eine verbesserte Näherung der oberen Hülle an das Spektrum ermöglichen soll.

In Bezug auf das Auflösungsvermögen für die Bestimmung charakteristischer Absorptionsmerkmale besteht im genannten Stand der Technik jedoch Raum für Verbesserung.

Ausgehend von diesem Stand der Technik ist es die Aufgabe der vorliegenden Erfindung, ein System und Verfahren bereitzustellen, mit denen die gesamte Komplexität eines Reflektanzspektrums mit seinen charakteristischen Absorptionsmerkmalen erfasst werden kann und die nicht die Nachteile und Unzulänglichkeiten des Standes der Technik aufweisen. Das erfindungsgemäße System und das erfindungsgemäße Verfahren sollen darüber hinaus in der Lage sein, kleine und komplexe Absorptionsmerkmale, sowie die Vegetationsmerkmale im Bereich von 670 und 1200 nm automatisch und ohne die Vorgabe von a *priori*-Expertenwissen, zu erkennen, das beispielsweise in Bibliotheken oder Datenbanken hinterlegt ist.

Erfindungsgemäß gelöst wird die Aufgabe durch das System gemäß Anspruch 1 der vorliegenden Anmeldung beschrieben wird, und dem Verfahren gemäß Anspruch 9 der vorliegenden Anmeldung. Weitere bevorzugte Ausführungsformen sind in den Unteransprüchen beschrieben.

Erfindungsgemäß ist ein System gemäß Anspruch 1 zur Auswertung von Reflektanzspektren und zur Bestimmung charakteristischer Absorptionsmerkmale eines Eingangs-Reflektanzspektrums vorgesehen. Das System umfasst eine Eingangseinheit, eine Rechnereinheit und eine Ausgabeeinheit, sowie eine Vorrichtung zur Aufnahme der Reflektanzspektren, wobei die Reflektanzspektren mit der Vorrichtung zur Aufnahme der Reflektanzspektren aufgenommen werden und mittels der Eingangseinheit zur Verarbeitung an die Rechnereinheit weitergeleitet werden und mittels der Rechnereinheit ausgewertet werden. Es wird demnach ein System aus den genannten Komponenten beansprucht, die, wie im Folgenden erläutert, zusammenwirken: Zur Auswertung eines von der Vorrichtung zur Aufnahme der Reflektanzspektren aufgenommenen Eingangs-Reflektanzspektrums durch die Rechner-Einheit wird ein Glättungsfilter aus einer Gruppe von mindestens zwei Glättungsfiltern ausgewählt. Es ist weiter vorgesehen, dass erste lokale Maxima auf ersten konvexen Teilbereichen des Eingangs-Reflektanzspektrums iterativ bestimmt werden, wobei aus den ersten lokalen Maxima mittels linearer Interpolation eine erste obere Hülle gebildet wird, die dem vom Eingangs-Reflektanzspektrum zu subtrahierenden Albedo entspricht. Demgemäß ist der Kern der Erfindung eine Kombination aus Vorrichtungsmerkmalen, nämlich eine Eingangseinheit, eine Rechnereinheit und eine Ausgabeeinheit, sowie eine Vorrichtung zur Aufnahme der Reflektanzspektren, zur Ausführung eines Verfahrens zur Auswertung von Reflektanzspektren und zur Bestimmung charakteristischer Absorptionsmerkmale eines Eingangs-Reflektanzspektrums.

Die Eingangseinheit, die zusammen mit einer Rechnereinheit und der Ausgabeeinheit, sowie der Vorrichtung zur Aufnahme der Reflektanzspektren das erfindungsgemäße System bildet, bezeichnet die Schnittstelle zwischen der Vorrichtung zur Aufnahme der Reflektanzspektren und der Rechnereinheit. Es ist bevorzugt, dass die Datenspektren im ENVI(r)-Datenformat aufgenommen und übertragen werden. Vorteilhafterweise bestehen solchen Dateien aus einer Datendatei im bsq-Format und einer Metadatendatei im hdr-Format. Es kann aber auch bevorzugt sein, dass hdf-Dateiformate Verwendung finden oder solche Dateiformate, die beispielsweise im Bereich der Fernerkundung üblich sind. Der durchschnittliche Fachmann kennt die in den verschiedenen Anwendungsbereichen gängigen Dateiformate.

Es ist weiter bevorzugt, dass Dateiformate verwendet werden, die Metadaten aufzeichnen, die die Vorrichtung zur Aufnahme der Reflektanzspektren charakterisieren. Bei diese Metadaten kann es sich beispielsweise um die Art der Zentrumswellen oder um die Halbwertsbreite der Kanäle handeln. Diese Daten ermöglichen vorteilhafterweise die Herstellung eines Bezugs zwischen ermittelten Daten und der Vorrichtung zur Aufnahme der Reflektanzspektren. Es ist bevorzugt, dass in einem erfindungsgemäßen System die Arbeitsgeschwindigkeiten und Datenaufnahmevolumina der einzelnen Komponenten aufeinander abgestimmt sind. Tests haben gezeigt, dass Rechnereinheiten mit mehreren Prozessorkernen und großen Arbeitsspeichern gute Auswertungsergebnisse erzielen, wobei durch die Verwendung von mehreren Prozessorkernen bei der Auswertung der Reflektanzdaten eine gleichzeitige, serielle Datenanalyse ermöglicht und die Auswertung beschleunigt wird.

Der durchschnittliche Fachmann weiß, welche technischen Möglichkeiten bereitstehen, die Schnittstelle zwischen einer Vorrichtung zur Aufnahme von Spektren sowie einer Rechnereinheit zu gestalten. Umfasst sind durch den Begriff der Eingangseinheit auch alle Ausgestaltungsformen von Schnittstellen, die in Zukunft dazu dienen, Daten-Volumina von Aufnahme-Vorrichtungen an auswertende Rechnereinheiten zu übertragen.

Die Eingangseinheit stellt im Sinne dieser Erfindung eine Datenschnittstelle dar, durch die die von der Vorrichtung zur Aufnahme der Reflektanzspektren ermittelten Reflektanzdaten an die Rechnereinheit weitergeleitet werden. Sie stellt gleichzeitig auch eine Maschinenschnittstelle als Schnittstelle zwischen zwei physischen Systemkomponenten dar, nämlich der Vorrichtung zur Aufnahme der Reflektanzspektren und der Rechnereinheit.

Der durchschnittliche Fachmann weiß, wie eine solche Daten-Schnittstelle hinsichtlich ihrer mechanischen und elektrischen Parameter beschaffen sein muss. Die mechanischen Parameter einer Datenschnittstelle umfassen beispielsweise die Position der Schnittstelle an einer Komponente, ihre Abmessungen, die Art der Montage, ihre Ausgestaltung oder die verwendeten Materialen. Die elektrischen Parameter umfassen beispielsweise die Lage und Art der elektrischen Verbindungen, minimale und maximale Spannungs- und Stromparameter oder Informationen hinsichtlich Leitungsdaten und Erdung.

Beispiele für Maschinenschnittstellen, die in der Computertechnik weit verbreitet sind, sind der PCI, AGP, SCSI, USB, Fire Wire. Dabei handelt es sich bei einem PCI-Bus um einen Bus-Standard zur Verbindung von Peripherie-Geräten mit dem Chipsatz eines Prozessors, wobei die Abkürzung "PCI" für "Peripheral Component Interconnect" steht. AGP ist eine Anschlussnorm auf PC-Hauptprozessoren zur direkten Verbindung der Graphikkarte mit einem Chipsatz, die technologisch auf dem PCI-Bus basiert und steht für "Accelerated Graphics Port". Mit der Abkürzung "SCSI" werden standardisierte Schnittstelle für die Verbindung und Datenübertragung zwischen Peripherie-Geräten und dem Computer-Bus bezeichnet, wobei es möglich ist, mehr als zwei Geräte anzuschließen und die Abkürzung SCSI für "Small Computer System Interface" steht. Als USB wird ein serielles Bussystem zur Verbindung eines Computers mit externen Geräten bezeichnet, wobei die Abkürzung USB "Universal Serial Bus" bedeutet. Ein Fire Wire ist ein Bus für serielle Datenübertragung.

Das erfindungsgemäße System umfasst weiter eine Rechnereinheit, mit der die von der Vorrichtung zur Aufnahme der Reflektanzspektren ermittelten Daten ausgewertet werden. Dabei kann es sich um eine Rechnereinheit, die in einem PC, Tablet, Notebook, Laptop oder jeder anderen Form von stationären oder mobilen rechnerfähigen Vorrichtungen vorliegt, handeln. Der durchschnittliche Fachmann weiß, dass ein PC üblicherweise über die folgenden Komponenten verfügt: eine Hauptplatine mit Schnittstellen zu allen nachfolgenden Bauteilen, die als Main-Bord oder Mother-Bord bezeichnet wird; einen Hauptprozessor; einen Prozessorkühler, einen Arbeitsspeicher, der auch als Random-Access-Memory (RAM) bezeichnet wird; ein Netzteil für die Stromversorgung; ein Festplattenlaufwerk; eine Graphikkarte sowie eine Tastatur und/oder eine Maus.

Eine Ausgabeeinheit im Sinne der Erfindung ist eine Vorrichtung zur Ausgabe der Ergebnisse der Auswertung der Reflektanzspektren, die bevorzugt in graphischer Form erfolgt. Unter den Begriff der Ausgabeeinheit im Sinne dieser Erfindung fallen beispielsweise Monitore oder Drucker. Es kann auch bevorzugt sein, dass durch die Ausgabeeinheit auch die Rohdaten des Eingangs-Reflektanzspektrums ausgegeben und dargestellt werden können, sowie jeder Zwischenschritt der Auswertung bis zum Erhalt des gewünschten Ergebnisses. Vorteilhafterweise kann die Ausgabe der Eingangs-Reflektanzspektren, der Zwischenschritte und/oder der Auswertungsergebnisse in Form von Listen, Übersichten, Tabellen, Diagrammen, Graphiken und jeder Kombination daraus erfolgen.

Es ist bevorzugt, dass die Eingangseinheit, die Rechnereinheit und die Ausgabeeinheit verbunden miteinander vorliegen. Es kann aber auch bevorzugt sein, dass die drei genannten Komponenten integriert in einer Vorrichtung vorliegen. Vorteilhafterweise kann es sich bei dem Monitor um einen Röhrenmonitor, Flachbild-Monitor, LCD/LED-Monitor, einen Flüssigkristall-Monitor oder einen Berührungs-Monitor handeln. Im Sinne dieser Erfindung bezeichnet der Begriff Monitor eine Vorrichtung, die einen Bildschirm zum Anschluss an einen Computer umfasst oder in diesem integriert vorliegt.

Der Begriff Drucker bezeichnet eine Vorrichtung, die üblicherweise als Peripherie-Gerät eines Computers zur Ausgabe von Daten ausgestaltet ist. Bei diesen Daten kann es sich vorteilhafterweise um Texte, Zeichen, Zahlen, Graphiken, Diagramme, Fotos und jede Kombination daraus handeln. Diese werden auf ein Trägermedium, zumeist Papier, übertragen.

Bei der Vorrichtung zur Aufnahme der Reflektanzspektren handelt es sich bevorzugt um eine Vorrichtung zur Aufnahme von spektroskopischen Daten. Es ist bevorzugt, dass die Daten, die die Reflektanzspektren bilden, mittels Fernerkundungssensoren aufgenommen werden, wobei zwischen sogenannten passiven und aktiven Systemen unterschieden wird. Aktive Systeme sind dadurch gekennzeichnet, dass eine Sendeeinheit elektromagnetische Strahlung einer bestimmten Wellenlänge aussendet und eine Eingangskomponente des aktiven Systems die reflektierten Anteile der ausgesendeten Strahlung empfängt. Im Gegensatz dazu zeichnen sich passive System dadurch aus, dass keine elektromagnetische Strahlung emittiert wird, das heißt, dass ein passives System keine Sendeeinheit umfasst. Stattdessen erfassen passive Systeme die von dem zu untersuchenden Objekt, beispielsweise der Erdoberfläche, reflektierte Sonnenstrahlung oder die von der Erdoberfläche emittierte Eigenstrahlung.

Der Begriff des Fernerkundungssensors umfasst eine Vielzahl verschiedener Sensortypen, wobei die verschiedenen Sensortypen vorteilhafterweise einen großen Bereich des elektromagnetischen Spektrums abdecken. Gebräuchliche Sensortypen sind beispielsweise Wärmebildkameras, die die im infraroten Bereich auftretende Wärmestrahlung eines Objektes erfassen können, Radarsysteme, Mikrowellenradiometer, Lasersensoren, Multispektralkameras und Hyperspektralsensoren.

Diesen Sensoren ist gemein, dass sie vorteilhafterweise auf unterschiedlichen Trägersystemen verwendet werden können. Bekannt ist die Verwendung von Scan-Schlitten oder der Einsatz von Flugzeugen, Fluggeräten oder Satelliten als Träger der Fernerkundungssensoren. Darüber hinaus kommen auch Erkundungsballons oder Drohnen als Träger von Fernerkundungssensoren infrage.

Der Informationsträger bei Informationserfassungsmethoden der Fernerkundung sind elektromagnetische Wellen. Ihre Gesamtheit bildet das elektromagnetische Spektrum, das von Wellen verschiedener Wellenlängen gebildet wird. Über die Formel

$$c = \lambda \cdot f$$

ist die Wellenlänge $\lambda$ mit der physikalischen Größe der Frequenz $f$ verbunden, wobei c der Lichtgeschwindigkeit entspricht. Das elektromagnetische Spektrum wird in verschiedene Bereiche unterteilt, wobei die Bezeichnungen der einzelnen Bereiche oft keiner wissenschaftlichen Systematik folgen, sondern historisch bedingte Trivialnamen darstellen.

Eine eigene Klasse der Fernerkundungssensoren stellen die Hyperspektralsensoren dar. Diese Sensorsysteme sind in der Lage, Daten über einen größeren Wellenlängensensitivitätsbereich kontinuierlich zu messen, wobei die elektromagnetische Strahlung in kleinen, separaten Wellenlängenintervallen aufgezeichnet wird. Dabei werden die einzelnen, separaten Wellenlängenintervalle als Kanal bezeichnet.

Das menschliche Auge beispielsweise sieht die Umwelt in den Wellenlängen der Grundfarben blau, grün und rot. Hierbei handelt es sich demgemäß um ein multispektrales Sensorsystem mit drei Kanälen. Hyperspektrale Sensorsysteme sind nach aktuellem Stand in der Lage, gleichzeitig Daten von bis zu 455 Kanälen aufzuzeichnen, wobei die Wellenlängen vom energiereichen ultravioletten Bereich bis in den langwelligen Infrarotbereich reichen. Daraus resultieren Wellenlängen im Bereich von 350 bis 2.500 Nanometer. Kurze Wellenlängen sind dabei mit hohen Frequenzen und großen Energiemengen verbunden, während große Wellenlängen mit kleinen Frequenzen und kleinen Energiemengen verbunden sind. Die in der Hyperspektral-Fernerkundung eingesetzte elektromagnetische Strahlung umfasst insbesondere das sichtbare Licht, welches im Wellenlängenbereich von 400 bis 700 Nanometern liegt, sowie die angrenzenden Bereiche des im Vergleich zum sichtbaren Licht energiereicheren ultravioletten Lichts, sowie die im Vergleich zum sichtbaren Licht energieärmere Infrarotstrahlung, die der Mensch als Wärmestrahlung wahrnimmt und deren Wellenlängen im Bereich von Wellenlängen größer als 700 Nanometern liegen.

Es war überraschend, dass ein System bereitgestellt werden kann zur Auswertung von insbesondere Hyperspektraldaten, die dem menschlichen Geist nicht zugänglich sind. Besonders überraschend war dies vor allem deswegen, weil bei dem erfindungsgemäßen System kein *a priori*-Wissen in Form von Datenbanken, Bibliotheken und Expertenwissen eingesetzt wird, sondern die Bestimmung der charakteristischen Merkmale der Reflektanzspektren allein durch die Anwendung des erfindungsgemäßen Systems erfolgt.

Vorteilhafterweise werden Methoden der abbildenden Spektroskopie in der Physik und in der Chemie zur Materialidentifikation eingesetzt. Im Bereich der optischen Fernerkundung werden spektroskopische Daten erhalten, die durch die Rückstrahlung von solar-reflektiven Wellenlängen im Bereich zwischen 350 bis 2500 Nanometern für die flächenhafte Identifikation von Oberflächenmaterialen eingesetzt werden. Vorteilhafterweise ist es dadurch möglich, spektroskopische Messungen und Verfahren nicht nur im Labor, oder bodengebunden durchzuführen, sondern mittels flugzeuggetragener und satellitengestützter Sensoren großflächig die Erdoberfläche, beispielsweise zum Zwecke der Materialkartierung, zu untersuchen.

Ein besonderer Vorteil des erfindungsgemäßen Systems besteht darin, in einer Vielzahl von weiteren technischen Anwendungsfeldern einsetzbar zu sein. Diese weiteren Anwendungsfelder betreffen beispielsweise die Stofftrennung, die Qualitätskontrolle und die Materialuntersuchung. Es ist jetzt schon durch neue Forschungsergebnisse absehbar, dass die Anwendungsbereiche der abbildenden Spektroskopie hinsichtlich der eingesetzten Wellenlängen in Zukunft weiter ausgeweitet werden. Dabei werden spektroskopische Verfahren in absehbarer Zeit in den Bereich des mittelwelligen und des thermalen Infrarots verstoßen, wodurch beispielsweise die Detektion von Gasen und die Identifikation bestimmter Mineralphasen, wie zum Beispiel Quarz oder Feldspat ermöglicht wird. Es war vollkommen überraschend, dass das erfindungsgemäße System unabhängig von der Wellenlänge der eingestrahlten Strahlung in der Lage ist, die Ergebnisse spektroskopischer Messungen auszuwerten und die charakteristischen Absorptionsmerkmale zu bestimmen. Eine Anwendung der konventionellen, im Stand der Technik beschriebenen Methoden zu, die überwiegend auf Expertenwissen und Datenbank- und Bibliotheksdaten-Abgleichen basieren, auf solche zukünftig möglichen Spektren, ist nicht möglich. Die universelle Anwendbarkeit des erfindungsgemäßen Systems, welches eine wellenlängen-unabhängige Auswertung von Spektren ohne die Verwendung von a *priori*-Wissen, ermöglicht, stellt ein wesentliches Verdienst der Erfindung dar.

Die mit der Vorrichtung zur Aufnahme der Reflektanzspektren aufgenommenen und mittels der Eingangseinheit zur Verarbeitung an die Rechnereinheit weitergeleiteten Daten und/oder Reflektanzspektren werden von der Recheneinheit ausgewertet. Vorteilhafterweise geschieht die Identifikation von unterschiedlichen Typen der Erdoberfläche mittels charakteristischer Absorptionsmerkmale, die im Kontext dieser Erfindung auch als charakteristische Absorptionsbanden bezeichnet werden. Die beiden Bezeichnungen werden im Rahmen dieser Anmeldung synonym verwendet. Oberflächentypen im Kontext dieser Anmeldung, die bei Fernerkundungsuntersuchungen vorkommen, unterscheiden sich beispielsweise durch ihre chemische oder mineralogische Zusammensetzung, durch ihre Vegetation oder den Zustand der Vegetation oder durch den Belag der Oberfläche, beispielsweise Wasser, Erde, Sand, Moos oder Wald. Der durchschnittliche Fachmann weiß, welche Typen von Oberflächen auf der Erde oder in anderen Anwendungsfeldern des erfindungsgemäßen Systems vorkommen können und wie diese bezeichnet werden. Vorteilhafterweise äußern sich die charakteristischen Absorptionsmerkmale als markante Konkavitäten innerhalb des Reflektanzspektrums.

Ein charakteristisches Absorptionsmerkmal äußert sich in einem Reflektanzspektrum durch eine markante Konkavität. Vorteilhafterweise wird damit ein lokales Minimum bezeichnet, welches sich zwischen zwei lokalen Maxima befindet. Im Kontext dieser Anmeldung werden die lokalen Maxima, die die als Konkavitäten ausgebildeten charakteristischen Merkmale begrenzen, auch als Absorptionsschultern bezeichnet. Eine Konkavität entspricht einer geringen Reflektanz der eingestrahlten elektromagnetischen Strahlung in dem Wellenlängenbereich, in dem sich die Konkavität hinsichtlich der Wellenlängen-Achse befindet. Eine geringe Reflektanz ist mit einer großen Absorption der zugehörigen elektromagnetischen Strahlung durch das zu untersuchende Material oder die zu untersuchende Oberfläche verbunden. Im Kontext dieser Anmeldung wird der Begriff der "hohen" oder "maximalen" Absorption in den Bereichen der Konkavitäten des Reflektanzspektrums verwendet.

Es ist bevorzugt, dass durch Interaktion der eingehenden elektromagnetischen Strahlung, beispielsweise Licht im Wellenlängenbereich von 350 bis 2500 Nanometer, mit dem Oberflächenmaterial eine materialspezifische Absorption der eingestrahlten elektromagnetischen Wellen verbunden ist. Diese wird zum Beispiel durch Kristallfeldübergänge im Wellenlängenbereich von 350 bis 1000 Nanometern verursacht. Beispielsweise treten diese Kristallfeldübergänge für Eisen und Elemente der seltenen Erden auf. Im langwelligen Bereich zwischen 2000 und 2500 Nanometern werden Obertöne aus dem thermalen Infrarotbereich beobachtet, die beispielsweise Gitterschwingungen von Al-OH und Mg-OH-Gruppen in Mineralen repräsentieren. Mithilfe der Position der maximalen Absorption eines jeden, im Spektrum gefundenen charakteristischen Absorptionsmerkmals lässt sich das unbekannte Oberflächenmaterial identifizieren. Mit dem Begriff der "Position" wird im Kontext dieser Anmeldung die Stelle auf der horizontalen Wellenlängen-Achse bezeichnet, die in der Analyse der x-Achse entspricht.

Eine Konkavität im Sinne dieser Erfindung bezeichnet demgemäß ein lokales Minimum in einem Reflektanzspektrum, das mit Hinblick auf die Wellenlängen-Achse von zwei lokalen Maxima begrenzt wird. Als Schultern eines Absorptionsmerkmals werden im Kontext dieser Erfindung die hinsichtlich der Wellenlängen-Achse rechts und links von der Position des jeweiligen charakteristischen Absorptionsmerkmals befindlichen lokalen Maxima in einem Reflektanzspektrum bezeichnet. Es war vollkommen überraschend, dass mit dem erfindungsgemäßen System auch solche Konkavitäten und charakteristische Absorptionsmerkmale aufgefunden werden können, die beispielweise von anderen Merkmalen überlagert werden oder in diesen enthalten sind. Insbesondere ermöglicht das erfindungsgemäße System eine hohe Auflösung hinsichtlich der bestimmbaren Merkmale, so dass selbst solche Absorptionsmerkmale ermittelt werden, die in nur einem sehr schmalen Wellenlängenbereich sichtbar sind. Ermöglicht wird dies insbesondere durch die optimierte Auswahl eines geeigneten Glättungsfilters und die iterative Bestimmung der lokalen Maxima mittels linearer Interpolation zum Erhalt einer oberen Hüllkurve, die der Albedo des Reflektanzspektrums entspricht.

Es ist weiter bevorzugt, dass sich mithilfe der maximalen Absorptionstiefen eine Semiquantifikation des Materials der untersuchten Oberfläche vornehmen lässt. Mit dem Begriff der "Semiquantifikation" wird im Kontext dieser Anmeldung eine Aussage über die Zusammensetzung des Materials einer untersuchten Oberfläche bezeichnet, zum Beispiel den Anteil eines Elementes, Minerales oder eines Stoffes an dem Oberflächenmaterial. Weitere Merkmale der Reflektanzspektren, die vorteilhafterweise zur Bestimmung und Beschreibung der charakteristischen Absorptionsmerkmale beitragen können, dienen die Positionen der Schultern der Absorptionsmerkmale, das Vorzeichen des Anstiegs einer Geraden, welche die rechte und linke Schulter eines Absorptionsmerkmals miteinander verbindet, sowie die Höhe oder Tiefen eines Absorptionsmerkmals.

Die Gerade, welche die rechte und linke Schulter eines charakteristischen Absorptionsmerkmales miteinander verbindet, stellt eine Sekante des Reflektanzspektrums dar. Ihr Anstieg oder ihre Steigung kann bestimmt werden, indem die Differenz der y-Werte zweier beliebiger Punkte der Sekante geteilt wird durch die Differenz der x-Werte der beiden ausgewählten beliebigen Punkte. Steigt die Gerade von links nach rechts im Hinblick auf die horizontale Wellenlängen-Achse an, so wird eine positive Steigung, das heißt ein positiver Quotient, aus der Division der Differenzen der y- und x-Werte erhalten. Für eine fallende Gerade ist diese Steigung negativ. Bei einer Steigung, die den Wert "null" annimmt, verläuft die Sekante waagerecht, also parallel zur Wellenlängen-Achse.

Die Höhe oder Tiefe eines charakteristischen Absorptionsmerkmals bezeichnet den Betrag der Differenz des maximalen y-Wertes eines charakteristischen Absorptionsmerkmals und des minimalen Werts eines charakteristischen Absorptionsmerkmals. Es ist bevorzugt, dass auf der vertikalen y-Achse eines Reflektanzspektrums die einheitslose Reflektanz dargestellt wird.

Vorteilhafterweise ermöglicht das erfindungsgemäße System die Auswertung insbesondere von großen Datenmengen, die sich durch die stetig verbessernde räumliche und spektrale Auflösung der Sensor-Vorrichtungen zur Aufnahme von Reflektanzspektren ergeben. Durch das erfindungsgemäße System wird eine effiziente Analyse der aufgenommenen Daten gewährleistet. Es war vollkommen überraschend, dass eine Möglichkeit bereitgestellt werden kann, umfangreiche Datenmengen auszuwerten, ohne die Nachteile des Standes der Technik aufzuweisen. Insbesondere werden durch das erfindungsgemäße System Qualitätseinbußen bei der Auswertung der großen Datenmengen, die bei der Aufnahme von Reflektanzspektren entstehen, hinsichtlich des Auflösungsvermögens bei der Bestimmung der charakteristischen Absorptionsmerkale vermieden.

Es war weiter vollkommen überraschend, dass mittels des erfindungsgemäßen Systems den variablen Beleuchtungsbedingungen der zu untersuchenden Oberflächen und Materialen Rechnung getragen wird. Diese variablen Beleuchtungsbedingungen ergeben sich aus dem Wechsel zwischen Licht und Schatten, also direkter Beleuchtung und indirekter Beleuchtung der Oberfläche oder des zu untersuchenden Materials. Vorteilhafterweise werden durch die Fokussierung auf die charakteristischen Absorptionsmerkmale Albedo-Effekte im Reflektanzspektrum vermieden, die eine vollständige Analyse von Reflektanzspektren über alle Wellenlängen verhindern würden.

Im Kontext dieser Anmeldung bezeichnet der Begriff "Albedo" das Maß für das Rückstrahlvermögen von diffus reflektierenden, also nicht selbst leuchtenden Oberflächen. Vor allem bei glatten Oberflächen, wie Wasser, Sand oder Schnee, hängt die Albedo stark vom Einfallswinkel der eingestrahlten Strahlung ab. Darüber hinaus ist die Albedo abhängig von der Wellenlänge der eingestrahlten elektromagnetischen Strahlung. Die Nachbildung der Albedo des Reflektanzspektrums ist erforderlich, um die Albedo in einem späteren Schritt vom Reflektanzspektrum entfernen zu können und somit die Bestimmung der charakteristischen Absorptionsmerkmale zu ermöglichen. Es war vollkommen überraschen, dass das erfindungsgemäße System eine besonders exakte Nachbildung der Albedo des Reflektanzspektrums ermöglicht. Eine exakte Nachbildung im Kontext dieser Anmeldung bedeutet, dass die Summe der Abweichungen zwischen Albedo und Reflektanzspektrum über alle Wellenlängen hinweg minimal ist im Vergleich zu den Summen, die durch die Anwendung konventioneller Methoden zur Albedo-Bestimmung erhalten werden. Die besonders exakte Nachbildung der Albedo wird insbesondere durch die Auswahl eines optimalen Glättungsfilters zur Glättung der Reflektanzdaten erreicht, sowie durch die iterative Bestimmung der lokalen Maxima der Reflektanzspektren mittel linearer Interpolation zum Erhalt von oberen Einhüllkurven, die die Albedo nachbilden.

Es war vollkommen überraschend, dass bei der Auswertung der Reflektanzspektren mittels des erfindungsgemäßen Systems nicht auf vorbekanntes Experten- und a priori-Wissen zurückgegriffen werden muss. Dies stellt einen Vorteil dar, weil die Auswertung der Reflektanzdaten somit nicht auf einen Vergleich mit vorbekannten Spektren in durch Vorwissen definierten Wellenlängenbereichen, den zuvor definierten charakteristischen Absorptionsbanden, beruht, sondern unabhängig von vorbekanntem Wissen und dessen offensichtlichen Einschränkungen und Limitationen ist. Durch die Analyse der Reflektanzspektren mittels des erfindungsgemäßen Systems können alle charakteristischen Merkmale der Reflektanzspektren unabhängig von einem vorher durch Expertenwissen festgelegten Wellenlängenbereich, in dem sie vorkommen, berücksichtigt werden. Vorteilhafterweise müssen bei der Auswertung der Reflektanzdaten keine Absorptionsbanden für ein auszuwertendes Spektrum manuell vorgegeben werden. Somit können alle charakteristischen Merkmale bei der Auswertung der Reflektanzspektren berücksichtigt werden und tragen zu einer verbesserten Auswertungsqualität der Reflektanzdaten im Vergleich zu den Methoden bei, die aus dem Stand der Technik bekannt sind. Durch diese detailliertere und effizientere Auswertung der aufgenommenen Reflektanzdaten durch die Fokussierung auf die charakteristischen Merkmale und die Verwendung eines durch die genannten Auswahlschritte bestimmten optimierten Glättungsfilters kann der Aufwand zur Ermittlung von Reflektanzdaten reduziert und dadurch Kosten gespart werden.

Es war vollkommen überraschend, dass bei der Bestimmung der charakteristischen Merkmale mittels des erfindungsgemäßen Systems nicht nur die rechte und linke Schulter eines Merkmals als begrenzende lokale Maxima zur umfassenden Analyse beitragen, wie es bei den im Stand der Technik beschriebenen Methoden üblich ist. Es stellt einen wesentlichen Vorteil des erfindungsgemäßen Systems zur Auswertung der Reflektanzdaten dar, dass zusätzlich zu den Positionen der Schultern auch das Vorzeichen der Sekante des Reflektanzspektrums und die Höhe, beziehungsweise die Tiefe der Konkavität, die das charakteristische Absorptionsmerkmal darstellt, berücksichtigt wird. Dies ermöglicht ein im Vergleich zu den konventionellen Auswertungsmethoden detaillierteres Verständnis eines jeden charakteristischen Absorptionsmerkmals, wodurch vorteilhafterweise besonders das Verständnis von solchen Merkmalen verbessert wird, die zuvor nicht manuell vorgegeben wurden.

Ein weiterer Vorteil bei der Verwendung des erfindungsgemäßen Systems besteht darin, dass aufgenommene, unbekannte Reflektanzspektren auch dann hinsichtlich ihrer charakteristischen Absorptionsmerkmale untersucht und analysiert werden können, wenn diese in ihrer Form und hinsichtlich der Positionen der charakteristischen Merkmale von vorbekannten Referenzspektren abweichen. Zu solchen Artefakten kann es in der abbildenden Spektroskopie, die im Bereich der Fernerkundung, aber auch in den weiteren Anwendungsfeldern verwendet wird, leicht kommen, da die spektroskopischen Messungen in der freien Natur und den dadurch offensichtlich vorkommenden natürlichen Schwankungen durchgeführt werden. Solche Abweichungen betreffen beispielsweise die Höhe der ermittelten Reflektanzwerte durch Lichteinfall oder Schatten oder Verschiebungen von Positionen der charakteristischen Merkmale auf der horizontalen Wellenlängenachse.

Eine besondere Herausforderung bei der Auswertung von Reflektanzspektren stellt es dar, wenn sich charakteristische Absorptionsmerkmale in Mischungen überlagern. Durch die Überlagerung von charakteristischen Absorptionsmerkmalen, die beispielsweise unterschiedlichen Gesteinsarten, kristallographischen Ausrichtungen, Vegetationstypen oder dergleichen entsprechen, wird eine Materialidentifizierung auf Grundlage von Experten- und a priori-Wissen verhindert oder zumindest erheblich erschwert.

Ein vorteilhafter Verdienst der Verwendung des erfindungsgemäßen Systems zur Auswertung der Reflektanzspektren besteht darin, dass insbesondere der sogenannte "green peak", der zur Unterscheidung von Vegetation von überragender Bedeutung ist und der die linke Schulter des Absorptionsmerkmals, das bei 670 Nanometern liegt, darstellt, sicher erkannt wird. Dadurch wird ein Vergleich zwischen unterschiedlichen Vegetationsspektren deutlich verbessert und die Gefahr einer fehlerhafte Auswertung der Reflektanzdaten aufgrund einer Falschidentifikation oder Falschzuordnung des "green peaks" entscheidend vermindert. Neben der Erkennung dieses "green peaks", der im Wellenlängenbereich von 550 nm liegt, ermöglicht die Verwendung des erfindungsgemäßen Systems auch die Erkennung eines für die Fernerkundung bedeutenden charakteristischen Absorptionsmerkmals im Bereich von 670 Nanometern, der durch die Absorption von Chlorophyll in diesem Wellenlängenbereich hervorgerufen wird. Daneben kann auch das für die Beurteilung von Vegetationstypen bedeutsame Absorptionsmerkmal bei 1200 Nanometern charakterisiert werden, welches Aufschluss über den Wassergehalt der Vegetation liefert.

Die vorteilhafte Verbesserung der Auswertung von Reflektanzspektren durch die Anwendung des erfindungsgemäßen Systems äußert sich auch darin, dass auch kleine Absorptionsmerkmale vom erfindungsgemäßen System sicher erkannt werden. In diesem Zusammenhang bezieht sich der Begriff "klein" sowohl auf die Ausdehnung des Absorptionsmerkmals in Bezug auf die horizontalen Wellenlängen-Achse des Reflektanzspektrums, das heißt die spektrale Ausdehnung des Absorptionsmerkmals, aber auch auf die Höhe des Absorptionsmerkmals in Bezug auf die vertikale y-Achse des Reflektanzspektrums, auf der die zurückgestrahlte Strahlung dargestellt ist. Entsprechend entspricht der Begriff "groß" einem charakteristischen Absorptionsmerkmal mit großer Ausdehnung auf der vertikalen y- oder Reflektanzachse oder auf der horizontalen Wellenlängen-Achse des Reflektanzspektrums.

Wenn beispielsweise in einem großen Absorptionsmerkmal mehrere kleine Absorptionsmerkmale vorliegen, die einen deutlich kleineren Bereich auf der Wellenlängen-Achse einnehmen und deren Höhe deutlich geringer ist als die Höhe des großen Absorptionsmerkmals, werden solche kleinen Absorptionsmerkmale bei konventionellen Methoden, die im Stand der Technik beschrieben sind, kaum bei der Auswertung und Analyse der Reflektanzdaten berücksichtigt. Durch die geschickte Auswahl eines optimalen Glättungsfilters, welcher der Datenauswertung zugrunde gelegt wird, wird eine Auswertung und Berücksichtigung auch von sehr kleinen Absorptionsmerkmalen gewährleistet. Die iterative Bestimmung von lokalen Maxima durch lineare Interpolation zur Ermittlung einer oberen Hüllkurve, die die Albedo des Reflektanzspektrums abbildet, trägt ebenso zu diesem vorteilhaften Effekt des erfindungsgemäßen Systems bei.

In einer weiteren bevorzugten Ausführungsform betrifft die Erfindung ein System zur Auswertung von Reflektanzspektren, das die Auswahl eines optimalen Glättungsfilters umfasst, wobei einer der mindestens zwei Glättungsfilter eine Filterlänge in einem Bereich von 0,5 bis 6 % einer Länge des Eingangs-Reflektanzspektrums aufweist, bevorzugt 1 bis 4 %, besonders bevorzugt 2 %, und ein zweiter Glättungsfilter eine Filterlänge in einem Bereich von 7 bis 13 % der Länge des Eingangs-Reflektanzspektrums aufweist, bevorzugt 8 bis 12 %, besonders bevorzugt von 9 bis 11 % und am meisten bevorzugt von 10 %.

Tests haben gezeigt, dass die Auswahl eines Glättungsfilters zur weiteren Verwendung innerhalb der Auswertung von Reflektanzspektren durch das erfindungsgemäße System optimale Auswertungsergebnisse liefert, wenn der Glättungsfilter aus einer Gruppe von mindestens zwei Glättungsfiltern ausgewählt wird und einer der mindestens zwei Glättungsfilter eine kleine Filterlänge aufweist und ein anderer Glättungsfilter eine große Filterlänge aufweist. Es ist bevorzugt, dass sich die Begriffe "klein" und "groß" auf die Filterlänge des Glättungsfilters beziehen, wobei eine kleine Filterlänge im Bereich von 0,5 bis 6 %, bevorzugt 1 bis 4 %, besonders bevorzugt 2 % des Eingangs-Signals der Reflektanzdaten liegt und ein eine große Filterlänge im Bereich von 7 bis 13 %, bevorzugt 8 bis 12 %, besonders bevorzugt von 9 bis 11 % und am meisten bevorzugt von 10 % des Eingangs-Signals der Reflektanzdaten.

Vorteilhafterweise werden durch die Anwendung eines Glättungsfilters mit einer definierten Filterlänge relevante Merkmale des Eingangs-Reflektanzspektrums hervorgehoben, Störungen und Artefakte im Reflektanzspektrum beseitigt und die visuelle Beurteilung des Eingangs-Reflektanzspektrums erleichtert. Die Anwendung eines Glättungsfilters ist mit den weiteren Vorteilen verbunden, dass der visuelle Eindruck des Reflektanzspektrums weicher und ein etwaiges Rauschen abgeschwächt wird. Der durchschnittliche Fachmann weiß, dass und wie das erfindungsgemäße System durch die Verwendung weiterer Glättungsfilter modifiziert werden kann.

Vorteilhafterweise beseitigt die erste Anwendung der Glättungsfilter auf eine Eingangs-Reflektanzspektrum Datenartefakte, wie beispielsweise Sensorrauschen. Durch die wiederholte Anwendung der Glättungsfilter auf das einmalig geglättete Spektrum wird der Glättungseffekt vorteilhafterweise verstärkt. Es ist bevorzugt, dass die Bildung der gaußschen Differenz zwischen ersten und zweiten Filterresultat eine Schärfung der Kanten des Reflektanzspektrums ermöglicht. Der Vergleich der so erhaltenen Standardabweichungen gewährleistet die Auswahl eines Glättungsfilters mit optimaler Filterlänge für das auszuwertende Eingangs-Reflektanzspektrum.

Tests haben gezeigt, dass die gaußsche Differenz mit der größten Standardabweichung ein Indiz für die Erhaltung der im Spektrum vorkommenden charakteristischen Absorptionsbanden ist. Auf diese Weise kann vorteilhafterweise gewährleistet werden, dass bei Vorhandensein kleiner Absorptionsbanden die charakteristischen Absorptionsbanden nicht durch die Anwendung eines zu großen Vorfilters im ersten Filterungsschritt unterdrückt werden. Kleine Absorptionsbanden treten beispielsweise für Elemente der Seltenen Erden auf. Vorteilhafterweise führt die Anwendung der Glättungsfilter zum Auffinden der lokalen Maxima der Reflektanzspektren. Im Sinne dieser Anmeldung handelt es sich dabei um die Bereiche lokaler Konkavitäten im Spektrum, die charakteristische Absorptionsbanden darstellen. Es ist bevorzugt, dass durch die Anwendung der Glättungsfilter das Auffinden der Stützstellen als Minima der Konkavitäten und darauf basierend das Auffinden der ersten Punkte der oberen Hülle ermöglicht wird.

Die Erfindung betrifft ein System, bei dem durch Substraktion der ersten oberen Hülle vom Eingangs-Reflektanzspektrum zweite konvexe Teilbereiche mit zweiten lokalen Maxima erhalten werden, wobei aus diesen zweiten lokalen Maxima mittels linearer Interpolation eine zweite obere Hülle gebildet wird, wobei dieser Schritt wiederholt wird, bis die Differenz aus n-ter oberer Hülle und Eingangs-Reflektanzspektrum einen festgelegten Schwellenwert unterschreitet und die Zahl $n$ die Anzahl der Iterationsschritte angibt.

Hierbei finden erste lokale Maxima des Reflektanzspektrums als Knotenpunkte zur Bestimmung einer ersten oberen Hülle des Eingangs-Reflektanzspektrums Verwendung. Die erste obere Hülle wird mittels linearer Interpolation der Knotenpunkte erhalten, wobei die Knotenpunkte durch Strecken miteinander verbunden werden.

Verfahren der linearen Interpolation werden vorteilhafterweise immer dann eingesetzt, wenn zu gegebenen, diskreten Daten, wie hier zum Beispiel den Reflektanzdaten, die durch Spektroskopie-Messungen erhalten wurden, eine stetige Funktion gefunden werden soll, welche diese Messdaten abbildet. Das mathematische Problem, das Eingangs-Reflektanzspektrum durch Interpolation abzubilden, wird durch die zuvor durchgeführten Schritte, insbesondere die Auswahl eines geeigneten Glättungsfilters und die Zerlegung des Eingangs-Reflektanzspektrums in konkave Teilbereiche, dahingehend umgewandelt, dass nunmehr Stützstellen zur Verfügung stehen, die das abzubildende Reflektanzspektrum in konkave und konvexe Teilbereiche unterteilen. Durch die Interpolation des Reflektanzspektrums durch Stützstellen wird vorteilhafterweise ermöglicht, die unbekannten zwischen den Stützstellen liegenden Punkte der unteren Hülle zu schätzen. Kennzeichnendes Merkmal der linearen Interpolation ist, dass gegebene Datenpunkte jeweils durch Strecken miteinander verbunden werden. Durch die lineare Interpolation wird die Albedo des Eingangs-Reflektanzspektrum angenähert, beziehungsweise nachgebildet.

Diese Albedo-Näherung wird vom Eingangs-Reflektanzspektrum durch Subtraktion entfernt, wodurch die Bestimmung der charakteristischen Absorptionsmerkmale ermöglicht wird. Dieses iterative Verfahren entspricht der Suche nach Schnittkurven der vorläufigen oberen Hüllkurve mit dem Eingangs-Reflektanzspektrum. Vorteilhafterweise bildet die obere Hüllkurve die Albedo des Eingangs-Reflektanzspektrums in einer optimalen Weise ab.

Die durch lineare Interpolation bestimmte erste obere Hülle wird vom Eingangs-Reflektanzspektrum abgezogen, wodurch weite konvexe Teilbereiche mit zweiten lokalen Maxima erhalten werden. Es war vollkommen überraschend, dass aus diesen zweiten lokalen Maxima mittels linearer Interpolation eine zweite obere Hülle gebildet werden kann, die eine deutlich verbesserte Nachbildung der Albedo des Eingangs-Reflektanzspektrum im Vergleich zur ersten oberen Hülle darstellt. Dieser Schritt wird so lange wiederholt, bis die Differenz aus n-ter oberer Hülle und Eingangs-Reflektanzspektrum einen festgelegten Schwellenwert unterschreitet. Die Zahl *n* gibt die Anzahl der Iterationsschritte an. Vorteilhafterweise kann durch die Vorab-Festlegung des Schwellenwertes sowohl die Güte, aber auch der Umfang und der Zeit- und Rechenaufwand für die Verwendung des erfindungsgemäßen Systems vom Anwender definiert werden. Die Verbesserungen durch die iterative Bestimmung der lokalen Maxima führen zu einer stetigen Verkleinerung der konvexen Bereiche, wodurch die Anzahl der aufgefundenen Maxima steigt und eine verbesserte Albedo-Nachbildung erreicht wird.

Die Erfindung betrifft ein System, bei dem die Auswertung der Reflektanzspektren die Auswahl eines Glättungsfilters umfasst, wobei die Auswertung durch die Rechnereinheit gekennzeichnet ist durch die Durchführung der folgenden Schritte:

a) Anwendung eines ersten Glättungsfilters mit einer ersten Filterlänge auf ein Eingangs-Reflektanzspektrum, wodurch ein erstes geglättetes Reflektanzspektrum erhalten wird,

b) Anwendung eines zweiten Glättungsfilters mit einer zweiten Filterlänge auf dasselbe Eingangs-Reflektanzspektrum, wodurch ein zweites geglättetes Reflektanzspektrum erhalten wird,

c) wiederholte Anwendung des ersten Glättungsfilters mit der ersten Filterlänge auf das erste geglättete Reflektanzspektrum, wodurch ein zweimalig geglättetes erstes Reflektanzspektrum erhalten wird,

d) wiederholte Anwendung des zweiten Glättungsfilters mit der zweiten Filterlänge auf das zweite geglättete Reflektanzspektrum, wodurch ein zweimalig geglättetes zweites Reflektanzspektrum erhalten wird,

e) Bildung einer ersten Differenz aus den Reflektanzspektren aus den Schritten a) und c) und Bildung einer zweiten Differenz aus den Reflektanzspektren aus den Schritten b) und d),

f) Ermittlung einer ersten und einer zweiten Standardabweichung aus der Bildung der ersten und zweiten Differenz aus Schritt e),

g) Vergleich der ersten und der zweiten Standardabweichung miteinander,

h) Auswahl einer der beiden Glättungsfilter mit korrespondierender Filterlänge zur weiteren Verwendung für die Auswertung des Reflektanzspektrums, wobei derjenige der beiden Glättungsfilter ausgewählt wird, der die größere Standardabweichung aufweist,

Das erfindungsgemäße System ist durch die Anwendung eines ersten Glättungsfilters mit einer ersten Filterlänge auf ein Eingangs-Reflektanzspektrum gekennzeichnet. Das Eingangs-Reflektanzspektrum wird mit der Vorrichtung zur Aufnahme der Reflektanzspektren aufgenommen und mittels der Eingangseinheit zur Verarbeitung an die Rechnereinheit weitergeleitet. Es ist bevorzugt, dass eine Filterlänge von 2 % der Länge des Reflektanzspektrums bei der Anwendung eines ersten Glättungsfilters verwendet wird. Durch die Anwendung eines ersten Glättungsfilters auf das Eingangs-Reflektanzspektrum wird ein erstes geglättetes Reflektanzspektrum erhalten.

Das erfindungsgemäße System umfasst weiter die Anwendung eines zweiten Glättungsfilters mit einer zweiten Filterlänge auf das unbearbeitete Eingangs-Reflektanzspektrum. Durch diese Anwendung eines von dem ersten Glättungsfilter verschiedenen Glättungsfilters wird ein zweites geglättetes Reflektanzspektrum erhalten. Es ist bevorzugt bei der Verwendung eines zweiten Glättungsfilters einen Filter mit einer Filterlänge von 10 % des Eingangs-Signals zu verwenden. Tests haben gezeigt, dass für die optimale Wahl eines geeigneten Glättungsfilters die Anwendung zweier Glättungsfilter mit unterschiedlichen Filterlängen, wobei ein Glättungsfilter eine kurze und der andere Glättungsfilter eine lange Filterlänge aufweist, eine optimale Auswahl eines geeigneten Glättungsfilters ermöglicht. Der durchschnittliche Fachmann weiß, dass das erfindungsgemäße System durch die Verwendung weiterer Glättungsfilter modifiziert werden kann.

Das erfindungsgemäße System umfasst weiter die wiederholte Anwendung des ersten Glättungsfilters mit der ersten Filterlänge auf das erste geglättete Reflektanzspektrum und die wiederholte Anwendung des zweiten Glättungsfilters mit der zweiten Filterlänge auf das zweite geglättete Reflektanzspektrum. Durch diese Schritte werden zweimalig geglättete erste und zweite Reflektanzspektren erhalten.

Es ist erfindungsgemäss vorgesehen, dass das erfindungsgemäße System die Bildung einer ersten Differenz aus dem ersten geglätteten Reflektanzspektrum und dem zweimalig geglätteten ersten Reflektanzspektrum gebildet wird, sowie die Differenz aus dem zweiten geglätteten Reflektanzspektrum und dem zweimalig geglätteten zweiten Reflektanzspektrum. Erfindungsgemäß ist weiter vorgesehen, auf Grundlage der ersten und zweiten Differenz eine erste und eine zweite Standardabweichung zu ermitteln. Diese beiden Standardabweichungen werden mittels eines Größer-Kleiner-Vergleichs miteinander verglichen mit dem Ziel, festzustellen, welche Standardabweichung den größeren Wert aufweist. Der durchschnittliche Fachmann weiß, dass die Anwendung der ersten Standardabweichung mit dem ersten Glättungsfilter korrespondiert, während die Anwendung der zweiten Standardabweichung mit dem zweiten Glättungsfilter korrespondiert.

Es ist weiter bevorzugt vorgesehen, dass einer der beiden Glättungsfilter zur weiteren Verwendung für die Auswertung der Reflektanzdaten ausgewählt wird, wobei derjenige der beiden Glättungsfilter ausgewählt wird, der die größere Standardabweichung aufweist. Vorteilhafterweise wird durch die optimale Wahl des Glättungsfilters als Vorfilter für die Auswertung der Reflektanzdaten die Detektion der konkaven Anteile des Eingangs-Reflektanzspektrums ermöglicht, wodurch die Bestimmung der Minima für jeden konkaven Teilbereich auf eine optimierte Weise erfolgt.

In einer weiteren bevorzugten Ausführungsform betrifft die Erfindung ein System zur Auswertung von Reflektanzspektren, bei dem die Auswertung der Reflektanzspektren eine Zerlegung des Eingangs-Reflektanzspektrums in konkave Teilbereiche mittels der folgenden Schritte umfasst:

a) Durchführung einer ersten und einer zweiten Faltung des Reflektanzspektrums mittels Anwendung des ausgewählten Glättungsfilters auf das Eingangs-Reflektanzspektrum,
b) Division des ersten geglätteten Reflektanzspektrums durch das zweimalig geglättete erste Reflektanzspektrum und Division des zweiten geglätteten Reflektanzspektrums durch das zweimalig geglättete zweite Reflektanzspektrum, wobei in Abhängigkeit von dem ausgewählten Glättungsfilter entweder das erste geglättete Reflektanzspektrum durch das zweimalig geglättete erste Reflektanzspektrum dividiert wird oder das zweite geglättete Reflektanzspektrum durch das zweimalig geglättete zweite Reflektanzspektrum dividiert wird,
c) Isolation aller Datenwerte, die größer sind als 1, aus dem Quotienten aus Schritt b) mittels binärer Codierung,
d) Bestimmung aller Datenwerte aus dem Eingangs-Reflektanzspektrum, die ungleich 0 sind,
e) Bestimmung aller Datenwerte, die ungleich 0 sind, aus der Isolation aus Schritt c), wodurch eine Codierung der Datenwerte durch Indizes erfolgt,
f) Abfrage der Indizes mittels logischer Verknüpfung, wodurch voneinander beabstandete konvexe Teilbereiche des Eingangs-Reflektanzspektrums ermittelt werden, die von Stützstellen begrenzt werden, die gleichzeitig auch zwischen den konvexen Teilbereichen angeordnete, voneinander beabstandete konkave Teilbereiche begrenzen.

Erfindungsgemäß ist vorgesehen, eine erste und eine zweite Faltung des Reflektanzspektrums mittels Anwendung des ausgewählten Glättungsfilters auf das Eingangs-Reflektanzspektrum durchzuführen. Eine Faltung im Kontext dieser Anmeldung ist eine mathematische Operation, bei der zwei Funktionen miteinander multipliziert werden, wobei als Produkt eine dritte Funktion erhalten wird. Zur Durchführung der ersten Faltung wird das Eingangs-Reflektanzspektrum mit dem zuvor ausgewählten Glättungsfilter multipliziert. Um die zweite Faltung durchzuführen, wird das erhaltene Produkt erneut mit dem Glättungsfilter multipliziert, wodurch ein zweimalig gefaltetes Reflektanzspektrum erhalten wird.

Vorteilhafterweise ermöglicht die Zerlegung des Reflektanzspektrums in konkave und konvexe Teilbereiche das Auffinden der Positionen der Absorptionsminima in den konkaven Teilbereichen des Spektrums, sowie die eine Bestimmung der unteren Hüllkurve mittels linearer Interpolation. Diese untere Hüllkurve ermöglicht in einem weiteren Auswertungsschritt das Auffinden der ersten oberen Maxima des Reflektanzspektrums.

Es ist weiter vorgesehen, dass die Zerlegung des Eingangs-Reflektanzspektrums in konkave Teilbereiche die Division des ersten geglätteten Reflektanzspektrums durch das zweimalig geglättete erste Reflektanzspektrum umfasst, sowie die Division des zweiten geglätteten Reflektanzspektrums durch das zweimalig geglättete zweite Reflektanzspektrum. Dabei wird in Abhängigkeit von dem ausgewählten Glättungsfilter entweder das erste geglättete Reflektanzsprektrum durch das zweimal geglättete erste Reflektanzspektrum oder das zweite geglättete Reflektanzspektrum durch das zweimal geglättete zweite Reflektanzspektrum dividiert.

Der durchschnittliche Fachmann weiß, dass in Abhängigkeit von dem zuvor ausgewählten Glättungsfilter nur eine der beiden beschriebenen Divisionen durchgeführt werden muss. Wenn beispielsweise der erste Glättungsfilter mit der kleinen Filterlänge von beispielsweise 2 % der Länge des Reflektanzspektrums ausgewählt wurde, werden die ersten geglätteten Reflektanzspektren durcheinander geteilt. Wenn dahingegen der zweite Glättungsfilter mit einer langen Filterlänge von beispielsweise 10 % des Eingangsspektrums ausgewählt wurde, werden die zweiten geglätteten Reflektanzspektren dividiert.

Die Zerlegung des Eingangsreflektanzspektrums in konkave Teilbereiche umfasst weiter die Insolation aller Datenwerte aus dem zuvor ermittelten Quotienten der geglätteten Reflektanzspektren, die größer sind als eins. Diese Isolation erfolgt durch eine binäre Codierung, wodurch die konvexen Anteile des Spektrums bestimmt werden. Bei der Isolation aller Datenwerte, die größer sind als eins, werden denjenigen zuvor bestimmten Quotienten der geglätteten Reflektanzspektren, die größer sind als eins, eine Eins geordnet, während denjenigen Quotienten, die kleiner als eins sind, eine Null zugeordnet wird.

Der zuvor berechnete Quotient wird also auf zwei Anteile aufgeteilt, wobei die Sortierung darauf beruht, ob der Wert des Quotienten der geglätteten Reflektanzspektren größer ist als eins oder kleiner als eins. Ein Quotientenwert von größer als eins bedeutet, dass das einmalig geglättete Reflektanzspektrum größer ist als das zweimalig geglättete Reflektanspektrum. Umgekehrt steht ein Quotientenwert von kleiner als eins dafür, dass das einmalig geglättete Reflektanzspektrum kleiner ist als das zweimalig geglättete Reflektanzspektrum. Die Sortierung der Quotientenwerte in zwei Gruppen erfolgt durch die Zuordnung einer Eins für alle Quotientenwerte größer als eins und der Zuordnung einer Null für alle Quotientenwerte kleiner als eins.

In einem weiteren Schritt umfasst die Zerlegung des Eingangs-Reflektanzspektrums in konkave Teilbereiche die Bestimmung aller Datenwerte aus dem Eingangs-Reflektanzspektrum, die ungleich null sind. Dabei wird allen Bereichen, die ungleich null sind, eine Eins zugeordnet, während solchen Stellen des Eingangs-Reflektanzspektrums, die gleich null sind, eine Null zugeordnet wird. Ein Datenwert des Eingangsreflektanzspektrums, der gleich null ist, ist gleichbedeutend damit, dass für diesen Wellenlängenbereich keine Reflektanz aufgezeichnet wurde. Eine solche Stelle entspricht einer Absorption der eingestrahlten elektromagnetischen Strahlung der durch diese Stelle im Reflektanzspektrum gekennzeichneten Wellenlänge.

Die Zerlegung des Eingangs-Reflektanzspektrums in konkave Teilbereiche umfasst weiter die Bestimmung aller Datenwerte, die ungleich null sind, aus der Isolation der Datenwerte mittels binärer Codierung. Durch diesen Schritt wird eine Codierung der Datenwerte durch Indices erreicht. Die aus der Isolation ermittelten Datenwerte, die ungleich null sind, entsprechen den Quotienten der geglätteten Reflektanzspektren, die größer als Null sind. In diesen Fällen ist das einmalig geglättete Reflektanzspektrum größer ist als das zweimalig geglättete Reflektanzspektrum. Bei den verwendeten Indices handelt es sich um die Zahlen null und eins, wobei eine Eins denjenigen Isolationswerten zugeordnet wird, für die der Wert des Quotienten der geglätteten Reflektanzspektren größer als eins ist. Eine Null wird denjenigen Isolationsergebnissen zugeordnet, für die der Quotient der geglätteten Reflektanzspektren kleiner als eins ist, also für die das einmalig geglättete Reflektanzspektrum kleiner ist als das zweimalig geglättete Reflektanzspektrum.

Erfindungsgemäß ist weiter vorgesehen, dass die Zerlegung des Eingangs-Reflektanzspektrums in konvexe Teilbereiche die Abfrage der zuvor zugeordneten Indices von null und eins mittels logischer Verknüpfung umfasst. Es ist bevorzugt, dass eine logische Verknüpfung konstruiert wird aus folgenden Fragen:

- Ist die Eingangs-Reflektanz ungleich null?
- Ist die Isolation der Quotientenwerte ungleich null?

Für die Stellen auf der horizontalen Wellenlängen-Achse des Reflektanzspektrums, für die diese beiden Fragen bejaht werden können, ist die logische Verknüpfung wahr. An diesen Stellen befinden sich die konvexen Anteile des Eingangs-Reflektanzspektrums. Durch die Abfrage der Indices mittels logischer Verknüpfung werden diese voneinander beabstandeten konvexen Teilbereiche des Eingangs-Reflektanzspektrums ermittelt. Sie unterscheiden sich von den konkaven Teilbereichen des Eingangs-Reflektanzspektrums durch die Art ihrer Wölbung. Es ist bevorzugt, dass die Stellen, an denen benachbarte konkave und konvexe Bereiche des Spektrums aufeinandertreffen, als Stützstellen des Spektrums bezeichnet werden. Sie stellen die Grenzen der konkaven und konvexen Teilbereiche des Eingangs-Reflektanzspektrums dar und trennen diese voneinander.

In einer weiteren bevorzugten Ausführungsform betrifft die Erfindung ein System zur Auswertung von Reflektanzspektren, bei der die Auswertung eine Bestimmung eines unteren Kontinuums für das Eingangs-Reflektanzspektrum umfasst. Die Bestimmung eines unteren Kontinuums für das Eingangs-Reflektanzspektrum wird durch die folgenden Schritte erreicht:

    a) Lineare Interpolation des Eingangs-Reflektanzspektrums mittels Stützstellen, die Grenzen zwischen konkaven und konvexen Teilbereichen des Eingangs-Reflektanzspektrums darstellen,

    b) Addition des Eingangs-Reflektanzspektrums zu einem Vektor gleicher Länge, dessen Komponenten alle gleich 1 sind,

    c) Subtraktion des Resultates der linearen Interpolation aus Schritt a) von der Summe aus Schritt b),

    d) Bestimmung aller Datenwerte aus der Differenz aus Schritt c), die in einem Intervall $]0, 1[$ liegen, wodurch vorläufige konkave Teilbereiche erhalten werden,

e) Bestimmung von Minima in den vorläufigen konkaven Teilbereichen aus Schritt d), wobei die Minima die Positionen größter Absorption des Eingangs-Reflektanzspektrums darstellen und Absorptionsmaxima in den vorläufigen konkaven Teilbereichen erhalten werden,

f) Verwendung der Absorptionsmaxima als Knotenpunkte zur Bestimmung einer unteren Hülle des Eingangs-Reflektanzspektrums durch lineare Interpolation zwischen den Absorptionsmaxima des Reflektanzspektrums.

Im Kontext der vorliegenden Anmeldung werden die Begriffe Kontinuum, Hülle, Einhüllende und Hüllkurve synonym verwendet. Gemeint ist damit eine Kurve, die das Eingangs-Reflektanzspektrum von oben oder unten einhüllt in dem Sinne, dass sich die Hüllkurve dem Spektrum annähert.

Die erfindungsgemäße Addition des Eingangs-Reflektanzspektrums zu einem Vektor gleicher Länge, dessen Komponenten alle gleich eins sind, bedeutet, dass zu den Datenwerten des Eingangs-Reflektanzspektrums jeweils eine Eins addiert wird. Durch diese Addition wird eine vorläufige erste interpolierte Hülle erhalten. Erfindungsgemäß ist weiter vorgesehen, dass die Bestimmung einer unteren Hüllkurve für das Eingangs-Reflektanzspektrum eine Subtraktion der ersten interpolierten Hülle von der Summe des Eingangs-Reflektanzspektrums mit einem Vektor gleicher Länge, dessen Komponenten alle gleich eins sind, umfasst. Es ist weiter erfindungsgemäß vorgesehen, dass diejenigen Datenwerte aus der zuvor durchgeführten Differenzbildung bestimmt werden, die in einem Intervall zwischen null und eins liegen. Durch diese Bestimmung werden vorläufige konkave Teilbereiche des Eingangs-Reflektanzspektrums ermittelt.

Für jeden vorläufigen, konkaven Teilbereich des Eingangs-Reflektanzspektrums werden in einem nächsten Schritte Minima bestimmt, wobei die Minima des Reflektanzspektrums die Stellen größter Absorption darstellen. Auf diese Weise werden die Absorptionsmaxima für jeden vorläufigen konkaven Teilbereich aufgefunden. Erfindungsgemäß ist weiter vorgesehen, die aufgefundenen Absorptionsmaxima als Knotenpunkte zur Bestimmung eines unteren Kontinuums des Eingangs-Reflektanzspektrums durch lineare Interpolation zwischen den Absorptionsmaxima des Reflektanzspektrums zu verwenden.

Das erfindungsgemäße System zur Auswertung von Reflektanzspektren umfasst eine Bestimmung von ersten lokalen Maxima für die konvexen Teilbereiche des Eingangs-Reflektanzspektrums. Dies wird durch die Durchführung folgender Schritte erreicht:

a) Subtraktion einer unteren Hülle vom Eingangs-Reflektanzspektrum, wodurch erste konvexe Teilstücke des Eingangs-Reflektanzspektrums erhalten werden, die durch eine 0 voneinander separiert sind,

b) Bestimmung eines ersten lokalen Maximums in jedem der konvexen Teilstücke aus Schritt a).

Durch die Subtraktion des zuvor bestimmten unteren Kontinuums oder der unteren Hülle des Eingangs-Reflektanzspektrums werden erste konvexe Teilstücke des Eingangs-Reflektanzspektrums erhalten, welche durch eine Null voneinander separiert sind. Erfindungsgemäß ist vorgesehen, dass in jedem der konvexen Teilstücke oder Teilbereiche ein erstes Maximum bestimmt wird. Dabei handelt es sich um ein lokales Maximum des entsprechenden konvexen Teilbereiches, was mit einem lokalen Minimum der Absorption korrespondiert.

Die Erfindung betrifft ein System zur Auswertung der Reflektanzspektren mit einer iterativen Bestimmung der charakteristischen Absorptionsmerkmale durch wiederholte Anwendung der folgenden Schritte:

a) Verwendung der ersten lokalen Maxima als Knotenpunkte zur Bestimmung einer vorläufigen oberen Hülle des Eingangs-Reflektanzspektrum mittels linearer Interpolation, wodurch eine erste Näherung eine Albedo des Eingangs-Reflektanzspektrums erhalten wird,

b) Subtraktion der vorläufigen oberen Hülle aus Schritt a) vom Eingangs-Reflektanzspektrum, wodurch zweite konvexe Teilstücke des Eingangs-Reflektanzspektrums erhalten werden, die durch eine 0 voneinander separiert sind,

c) Bestimmung eines zweiten Maximums in jedem der zweiten konvexen Teilstücke aus Schritt b), wobei die zweiten Maxima in Kombination mit den ersten Maxima eine verbesserte Nachbildung einer Albedo des Eingangs-Reflektanzspektrums ermöglichen im Vergleich zu den ersten Maxima,

d) Wiederholung der Schritte a) bis c), bis eine Abweichung zwischen der vorläufigen oberen Hülle und einem oberen Perimeter des Eingangs-Reflektanzspektrums einen festgelegten Wert unterschreitet, wodurch eine Näherung einer Albedo des Eingangs-Reflektanzspektrums erhalten wird.

Es ist vorgesehen, dass die ersten lokalen Maxima des Reflektanzspektrums als Knotenpunkte zur Bestimmung einer vorläufigen oberen Hülle des Eingangs-Reflektanzspektrums verwendet werden. Dies geschieht durch lineare Interpolation, wodurch eine erste Näherung einer Albedo des Eingangs-Reflektanzspektrums erhalten wird.

Ihre iterative Bestimmung mittels einer unteren Einhüllenden oder eines unteren Kontinuums stellt eine wesentliche Komponente zur Erreichung der erfindungswesentlichen Vorteile bei der Überwindung der Nachteile des Standes der Technik dar. Durch die Subtraktion der vorläufigen oberen Hülle vom Eingangs-Reflektanzspektrum werden zweite konvexe Teilstücke oder Teilbereiche des Eingangs-Reflektanzspektrums erhalten, die ebenfalls durch eine Null voneinander getrennt sind. Auch in diesen zweiten konvexen Teilstücken werden lokale Maxima bestimmt, die als zweite lokale Maxima oder Absorptionsschultern bezeichnet werden. Diese ermöglichen eine verbesserte Darstellung des Eingangs-Reflektanzspektrums im Vergleich zu den ersten lokalen Maxima.

Die drei Schritte zur iterativen Bestimmung der charakteristischen Absorptionsmerkmale werden solange wiederholt, bis eine Abweichung zwischen der vorläufigen oberen Hülle und einem oberen Perimeter des Eingangs-Reflektanzspektrums einen festgelegten Wert unterschreitet, wodurch eine Näherung einer Albedo des Eingangs-Reflektanzspektrums erhalten wird.

In einer weiteren bevorzugten Ausführungsform betrifft die Erfindung ein System, bei dem die Auswertung der Reflektanzspektren eine absolute Bestimmung der charakteristischen Absorptionsmerkmale durch eine Subtraktion des Eingangs-Reflektanzspektrums von der zuvor aufgefundenen Näherung der Albedo des Eingangs-Reflektanzspektrums umfasst. Im Sinne dieser Anmeldung bezeichnet der Begriff "absolute Bestimmung" die Ermittlung charakteristischer Absorptionsmerkmale hinsichtlich der zugehörigen Wellenlänge im Reflektanzspektrums. Durch die Ermittlung der zugehörigen Wellenlänge kann das charakteristische Merkmal beispielsweise bestimmten chemischen Elementen, Kristallstrukturen, Oberflächenbelägen oder Vegetationsformen zugeordnet werden. Eine absolute Isolation der charakteristischen Absorptionsmerkmale wird vorteilhafter durch die beschriebene Subtraktion erreicht.

In einer weiteren bevorzugten Ausführungsform betrifft die Erfindung ein System, bei dem eine relative Isolation der charakteristischen Absorptionsmerkmale durch eine Normierung des Eingangs-Reflektanzspektrums mit der zuvor aufgefundenen Näherung der Albedo des Eingangs-Reflektanzspektrums erhalten wird. Der Begriff der relativen Isolation beschreibt das Auffinden von charakteristischen Merkmalen in Relation zu anderen Merkmalen des Reflektanzspektrums. Im Rahmen der relativen Isolierung der Absorptionsmerkmale wird beispielsweise auf die Abstände der Merkmale zueinander im Hinblick auf die horizontale Wellenlängenachse abgestellt.

Es ist bevorzugt, dass die absoluten Tiefen eines Absorptionsmerkmals bei einer absoluten Isolation der charakteristischen Absorptionsmerkmale erhalten bleiben. Dies stellt einen Vorteil des erfindungsgemäßen Systems dar, weil beispielsweise durch die die Erhaltung der absoluten maximalen Absorptionstiefe eine Beurteilung der Güte der Auswertung der charakteristischen Absorptionsmerkmale ermöglicht wird. Darüber hinaus kann durch eine absolute Isolation ein absoluter Bezug, zum Beispiel zum Signal-Rauschverhältnis des eingesetzten Sensors und der daraus resultierenden minimalen Absorptionstiefe bei einer gegeben Albedo in einem Kanal, hergestellt werden.

Erfindungsgemäß ist ein Verfahren gemäß Anspruch 9 zur Bestimmung von charakteristischen Absorptionsmerkmalen aus Reflektanzspektren mittels eines beschriebenen Systems vorgesehen.

In einer bevorzugten Ausführungsform betrifft die Erfindung ein Verfahren zur Detektion und Extraktion von charakteristischen Absorptionsmerkmalen:

a) Anwendung eines ersten Glättungsfilters mit einer ersten Filterlänge auf ein Eingangs-Reflektanzspektrum, das mit der Vorrichtung zur Aufnahme der Reflektanzspektren aufgenommen und mittels der Eingangseinheit zur Verarbeitung an die Rechnereinheit weitergeleitet wird, wodurch ein mit dem ersten Glättungsfilter geglättetes Reflektanzspektrum erhalten wird,

b) Anwendung eines zweiten Glättungsfilters mit einer zweiten Filterlänge auf dasselbe Eingangs-Reflektanzspektrum, wodurch ein mit dem zweiten Glättungsfilter geglättetes Reflektanzspektrum erhalten wird,

c) wiederholte Anwendung des ersten Glättungsfilters mit der ersten Filterlänge auf das mit dem ersten Glättungsfilter geglättete Reflektanzspektrum, wodurch ein zweimalig geglättetes erstes Reflektanzspektrum erhalten wird,

d) wiederholte Anwendung des zweiten Glättungsfilters mit der zweiten Filterlänge auf das mit dem zweiten Glättungsfilter geglättete Reflektanzspektrum, wodurch ein zweimalig geglättetes zweites Reflektanzspektrum erhalten wird,

e) Bildung einer ersten Differenz aus den Reflektanzspektren aus den Schritten a) und c) und Bildung einer zweiten Differenz aus den Reflektanzspektren aus den Schritten b) und d),

f) Ermittlung einer ersten und einer zweiten Standardabweichung aus der Bildung der ersten und zweiten Differenz aus Schritt e),

g) Vergleich der ersten und der zweiten Standardabweichung miteinander,

h) Auswahl einer der beiden Glättungsfilter mit korrespondierender Filterlänge zur weiteren Verwendung für die Auswertung des Reflektanzspektrums, wobei derjenige der beiden Glättungsfilter ausgewählt wird, der die größere Standardabweichung aufweist,

i) Durchführung einer ersten und einer zweiten Faltung des Reflektanzspektrums mittels Anwendung des ausgewählten Glättungsfilters auf das Eingangs-Reflektanzspektrum,

j) Division des geglätteten Reflektanzspektrums nach Schritt a) oder b) durch das zweimalig geglättete Reflektanzspektrum nach Schritt c) oder d), wobei in Abhängigkeit von dem ausgewählten Glättungsfilter gemäß Schritt h) entweder das geglättete Reflektanzspektrum aus Schritt a) durch das zweimalig geglättete Reflektanzspektrum aus Schritt c) dividiert wird oder das geglättete Reflektanzspektrum aus Schritt b) durch das zweimalig geglättete Reflektanzspektrum aus Schritt d) dividiert wird,

k) Isolation aller Datenwerte, die größer sind als 1, aus dem Quotienten aus Schritt j) mittels binärer Codierung,

l) Bestimmung aller Datenwerte aus dem Eingangs-Reflektanzspektrum, die ungleich 0 sind,

m) Bestimmung aller Datenwerte, die ungleich 0 sind, aus der Isolation aus Schritt k), wodurch eine Codierung der Datenwerte durch Indizes erfolgt

n) Abfrage der Indizes mittels logischer Verknüpfung, wodurch voneinander beabstandete konvexe Teilbereiche des Eingangs-Reflektanzspektrums ermittelt werden, die von Stützstellen begrenzt werden, die gleichzeitig auch zwischen den konvexen Teilbereichen angeordnete, voneinander beabstandete konkave Teilbereiche begrenzen,

o) Lineare Interpolation des Eingangs-Reflektanzspektrums mittels der Stützstellen aus Schritt n),

p) Addition des Eingangs-Reflektanzspektrums zu einem Vektor gleicher Länge, dessen Komponenten alle gleich 1 sind,

q) Subtraktion des Resultates der linearen Interpolation aus Schritt p) von der Summe aus Schritt q),

r) Bestimmung aller Datenwerte aus der Differenz aus Schritt r), die in einem Intervall ]0, 1[ liegen, wodurch vorläufige Absorptionsbande in konkaven Teilbereichen erhalten werden,

s) Bestimmung von Minima pro charakteristischem Absorptionsmerkmal aus den vorläufigen Absorptionsbanden aus Schritt s), wobei die Minima die Positionen größter Absorption des Eingangs-Reflektanzspektrums darstellen und Absorptionsmaxima pro charakteristischem Merkmal erhalten werden,

t) Verwendung der Absorptionsmaxima als Knotenpunkte zur Bestimmung einer unteren Hülle des Eingangs-Reflektanzspektrums durch lineare Interpolation zwischen den Absorptionsminima des Reflektanzspektrums,

u) Subtraktion der unteren Hülle aus Schritt t) vom Eingangs-Reflektanzspektrum, wodurch erste konvexe Teilstücke des Eingangs-Reflektanzspektrums erhalten werden, die durch eine 0 voneinander separiert sind,

v) Bestimmung eines ersten Maximums in jedem der konvexen Teilstücke aus Schritt v),

w) Verwendung der ersten lokalen Maxima als Knotenpunkte zur Bestimmung einer vorläufigen oberen Hülle des Eingangs-Reflektanzspektrum mittels linearer Interpolation, wodurch eine erste Näherung einer Albedo des Eingangs-Reflektanzspektrums erhalten wird,

x) Substraktion der vorläufigen oberen Hülle aus Schritt w) vom Eingangs-Reflektanzspektrum, wodurch zweite konvexe Teilstücke des Eingangs-Reflektanzspektrums erhalten werden, die durch eine 0 voneinander separiert sind,

y) Bestimmung eines zweiten Maximums in jedem der zweiten konvexen Teilstücke aus Schritt x), wobei die zweiten lokalen Maxima eine verbesserte Nachbildung einer Albedo des Eingangs-Reflektanzspektrums ermöglichen als die ersten lokalen Maxima,

z) Wiederholung der Schritte w) bis z), bis eine Abweichung zwischen der vorläufigen oberen Hülle und einem oberen Perimeter des Eingangs-Reflektanzspektrums einen festgelegten Wert unterschreitet, wodurch eine Näherung einer Albedo des Eingangs-Reflektanzspektrums und eine Isolation der charakteristischen Absorptionsmerkmale erhalten wird.

In einer weiteren bevorzugten Ausführungsform betrifft die Erfindung ein System zur Auswertung von Reflektanzspektren, wobei vor der Auswertung des Eingangs-Reflektanzspektrums eine generische Interpolation des Eingangs-Reflektanzspektrums auf äquidistante Wellenlängenabstände durchgeführt wird. Dieser vorteilhafte Vorprozessierungsschritt wird mittels eines generischen Sensors mit einer definierten spektralen Auflösung, die dem äquidistanten Wellenlängenabstand entspricht, erreicht.

Es ist bevorzugt, eine spektrale Auflösung von 1 nm als äquidistanten Wellenlängenabstand zu verwenden. Durch die generische Interpolation des Eingangs-Reflektanzspektrums wird eine erhöhte Genauigkeit bei der Bestimmung der charakteristischen Merkmale des Reflektanzspektrums aus Spektrometern mit variabler spektraler Auflösung gewährleistet. Der Vorprozessierungsschritt der generischen Interpolation stellt vorteilhafterweise ein Normierungsverfahren dar, welches Reflektanzspektren, die mit unterschiedlichen Spektrometer-Vorrichtungen und variablen spektralen Auflösungen aufgenommen wurden, auf gleiche Wellenlängenabstände normiert.

In einer weiteren bevorzugten Ausführungsform der Erfindung erfolgt die generische Interpolation des Eingangs-Reflektanzspektrums unter Verwendung von Splines. Im Kontext dieser Anmeldung bezeichnet ein Spline einen Polynomzug n-ten Grades, das heißt eine Funktion, die stückweise aus Polynomen zusammengesetzt ist, die höchstens n-ten Grads sind. Die Stellen, an denen sich zwei Polynomstücke gleichen oder unterschiedlichen Grades treffen, werden als Knoten oder Knotenpunkte des Splines bezeichnet. Ein wesentlicher Vorteil bei der Verwendung von Splines besteht darin, dass Spline-Interpolationen keine Oszillationen aufweisen, die von Polynomen höheren Grades und deren Unbeschränktheit bei der Polynom-Interpolation entstehen.

In einer weiteren bevorzugten Ausführungsform betrifft die Erfindung ein System zur Auswertung von Reflektanzspektren, bei dem die generische Interpolation des Eingangs-Reflektanzspektrums unter Verwendung von piecewise cubic hermite interpolation polynomial-Methoden (PCHIP) erfolgt. Bei der sogenannten PCHIP-Methode handelt es sich um die Anwendung eines Polynomzugs, bei dem jedes Teilstück ein Polynom dritten Grades darstellt. PCHIP-Methoden werden vorteilhafterweise für die Interpolation einer Kurve verwendet, die durch festgelegte Punkte einer Ebene im dreidimensionalen Raum geht.

Die Erfindung wird anhand von Ausführungsbeispielen und der nachfolgenden Figuren näher beschrieben; es zeigt:

Figur 1    Darstellung der wichtigsten Schritte des erfindungsgemäßen Verfahrens an einem Referenzspektrum

Figur 2    Darstellung der wichtigsten Schritte des erfindungsgemäßen Verfahrens an einem weiteren Referenzspektrum

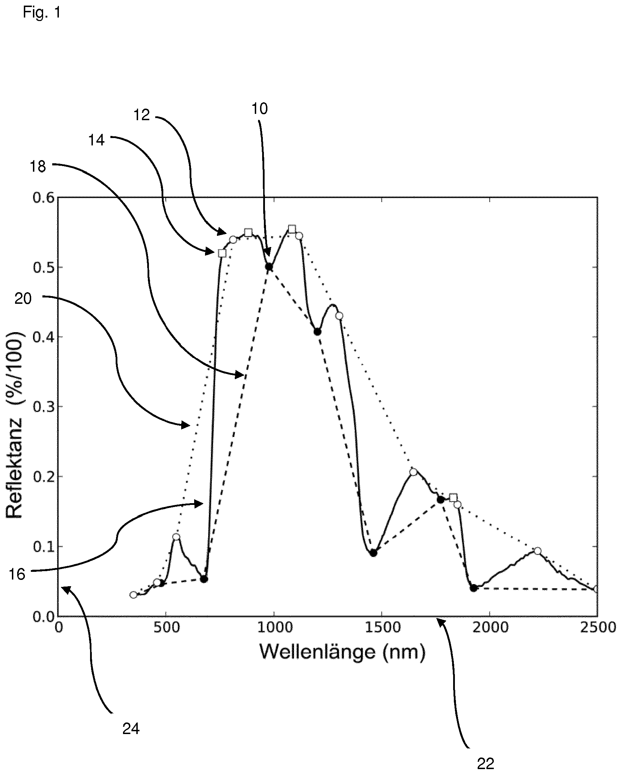

Figur 1 zeigt ein übliches Reflektanzspektrum (16), wie es bei Messungen mit Vorrichtungen zur Aufnahme von Reflektanzspektren erhalten wird. Auf der horizontalen x-Achse (22) des Koordinatensystems ist die Wellenlänge $\lambda$ in nm aufgetragen. Dabei handelt es sich um die Wellenlänge der eingestrahlten elektromagnetischen Strahlung, deren Reflektanz bei spektroskopischen Messungen aufgezeichnet wird. Die Reflektanz ist auf der vertikalen y-Achse (24) des Koordinatensystems aufgetragen. Sie wird üblicherweise in Prozent angegeben. In Figur 1 sind die wichtigsten Schritte des erfindungsgemäßen Verfahrens an einem Referenzspektrum (16) dargestellt. Gezeigt wird, dass zunächst eine untere Hüllkurve (18) entlang von lokalen Minima (10) des Reflektanzspektrums (16) konstruiert wird. Diese untere Hüllkurve (18) ist in Abbildung 1 durch die gestrichelte Linie dargestellt. Anschließend werden die Maxima (12) des Reflektanzspektrums (16) in jedem der durch die untere Hüllkurve (18) voneinander getrennten Segmenten bestimmt. Diese lokalen Maxima (12) sind durch kreisförmige Punkte in Abbildung 1 dargestellt. Mittels linearer Interpolation wird dann eine vorläufige obere Hüllkurve (20) bestimmt, die in Abbildung 1 durch eine gepunktete Linie dargestellt ist. Sie entsteht durch Verbindung der zuvor bestimmten lokalen Maxima (12) mittels Strecken. Zu dieser vorläufigen oberen Hüllkurve (20) werden durch Iteration neue lokale Maxima (14) hinzugefügt. Diese sind in Abbildung 1 durch kleine Kästchen veranschaulicht. Durch Wiederholung der iterativen Schritte kann das Auffinden der lokalen Maxima (14) mit jedem Schritt optimiert werden, so dass die aufgefundenen lokalen Maxima (14) immer besser mit den tatsächlich im Spektrum (16) vorhandenen Maxima übereinstimmen. Das Endresultat der Iteration entspricht näherungsweise der Albedo des Reflektanzspektrums, welches durch Subtraktion aus dem Eingangs-Reflektanzspektrum entfernt wird. Durch die Entfernung der Albedo wird die Bestimmung der charakteristischen Merkmale ermöglicht.

Deutlich zu erkennen ist in Fig. 1 ein Absorptionsmerkmal im Bereich von 670 nm. Dieses charakteristische Merkmal wird von der Absorption der eingestrahlten elektromagnetischen Strahlung durch Chlorophyll hervorgerufen. Das erfindungsgemäße System ermöglicht die sichere Erkennung dieses Merkmals, die bei konventionellen Verfahren aufgrund der großen Nähe des Absorptionsmerkmals zu dem lokalen Maximum (12) im Reflektanzspektrum und dem durch Interpolation ermittelten lokalen Maximum (14) nicht erfolgt.

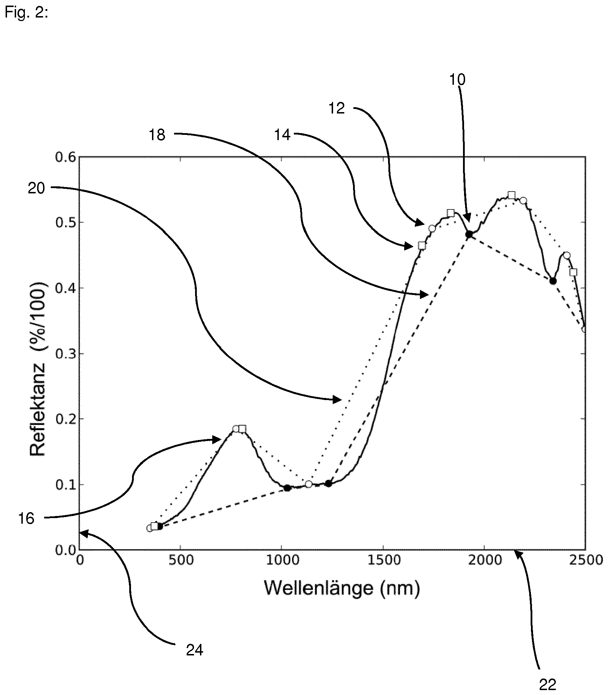

Figur 2 zeigt eine Darstellung der wichtigsten Schritte des Verfahrens der geometrischen Hülle an einem weiteren Referenzspektrum.

Bezugszeichenliste:

10    lokales Minimum im Reflektanzspektrum
12    lokales Maximum im Reflektanzspektrum
14    durch Interpolation ermitteltes lokales Maximum
16    unbearbeitetes Reflektanzspektrum
18    untere Hüllkurve
20    obere Hüllkurve
22    horizontale x-Achse des Koordinatensystems, auf der die Wellenlänge $\lambda$ in nm aufgetragen wird
24    vertikale y-Achse des Koordinatensystems, auf der die Reflektanz aufgetragen wird

**Patentansprüche**

1.    System zur Auswertung von Reflektanzspektren durch die Bestimmung charakteristischer Absorptionsmerkmale eines Eingangs-Reflektanzspektrums (16) umfassend eine Eingangseinheit, eine Rechnereinheit und eine Ausgabeeinheit, sowie eine Vorrichtung zur Aufnahme der Reflektanzspektren **dadurch gekennzeichnet, dass** eine Auswertung des durch die Vorrichtung zur Aufnahme der Reflektanzspektren aufgenommenen Eingangs-Reflektanzspektrums (16) durch die Rechner-Einheit folgende Schritte umfasst:

    a) Anwendung eines ersten Glättungsfilters mit einer ersten Filterlänge auf das Eingangs-Reflektanzspektrum (16), wodurch ein mit dem ersten Glättungsfilter geglättetes Reflektanzspektrum erhalten wird,
    b) Anwendung eines zweiten Glättungsfilters mit einer zweiten Filterlänge auf das Eingangs-Reflektanzspektrum (16), wodurch ein mit dem zweiten Glättungsfilter geglättetes Reflektanzspektrum erhalten wird,
    c) wiederholte Anwendung des ersten Glättungsfilters mit der ersten Filterlänge auf das mit dem ersten Glättungsfilter geglättete Reflektanzspektrum, wodurch ein zweimalig geglättetes erstes Reflektanzspektrum erhalten wird,
    d) wiederholte Anwendung des zweiten Glättungsfilters mit der zweiten Filterlänge auf das mit dem zweiten Glättungsfilter geglättete Reflektanzspektrum, wodurch ein zweimalig geglättetes zweites Reflektanzspektrum erhalten wird,

e) Bildung einer ersten Differenz aus den Reflektanzspektren aus den Schritten a) und c) und Bildung einer zweiten Differenz aus den Reflektanzspektren aus den Schritten b) und d),

f) Ermittlung einer ersten und einer zweiten Standardabweichung aus der Bildung der ersten und zweiten Differenz aus Schritt e),

g) Vergleich der ersten und der zweiten Standardabweichung miteinander,

h) Auswahl einer der beiden Glättungsfilter mit korrespondierender Filterlänge zur weiteren Verwendung für die Auswertung des Reflektanzspektrums, wobei derjenige der beiden Glättungsfilter ausgewählt wird, der die größere Standardabweichung aufweist,

i) Zerlegung des Eingangs-Reflektanzspektrums (16) in konkave Teilbereiche unter Anwendung des ausgewählten Glättungsfilters,

j) Bestimmung von Minima (10) der konkaven Teilbereiche aus Schritt i),

k) Bestimmung einer unteren Hülle (18) des Eingangs-Reflektanzspektrums (16) durch lineare Interpolation der Minima (10) aus j),

l) Subtraktion der unteren Hülle (18) aus Schritt k) vom Eingangs-Reflektanzspektrum (16), wodurch erste konvexe Teilstücke des Eingangs-Reflektanzspektrums (16) erhalten werden, die durch eine 0 voneinander separiert sind,

m) Bestimmung eines ersten lokalen Maximums (12) in jedem der konvexen Teilstücke aus Schritt l),

n) Verwendung der ersten lokalen Maxima (12) als Knotenpunkte zur Bestimmung einer vorläufigen oberen Hülle (20) des Eingangs-Reflektanzspektrum (16) mittels linearer Interpolation, wodurch eine erste Näherung einer Albedo des Eingangs-Reflektanzspektrums (16) erhalten wird,

o) Subtraktion der vorläufigen oberen Hülle (20) aus Schritt n) vom Eingangs-Reflektanzspektrum (16), wodurch zweite konvexe Teilstücke des Eingangs-Reflektanzspektrums (16) erhalten werden, die durch eine 0 voneinander separiert sind,

p) Bestimmung eines zweiten Maximums (14) in jedem der zweiten konvexen Teilstücke aus Schritt o), wobei die zweiten Maxima (14) in Kombination mit den ersten Maxima (12) eine verbesserte Nachbildung einer Albedo des Eingangs-Reflektanzspektrums (16) ermöglichen im Vergleich zu den ersten Maxima (12),

q) Wiederholung der Schritte n) bis p), bis eine Abweichung zwischen der vorläufigen oberen Hülle (20) und einem oberen Perimeter des Eingangs-Reflektanzspektrums (16) einen festgelegten Wert unterschreitet, wodurch eine Näherung einer Albedo des Eingangs-Reflektanzspektrums (16) erhalten wird mit Hilfe derer eine Isolation der charakteristischen Absorptionsmerkmale erfolgt.

2. System nach Anspruch 1
**dadurch gekennzeichnet, dass**
der erste Glättungsfilter eine Filterlänge in einem Bereich von 0,5 bis 6 % der Länge des Eingangs-Reflektanzspektrums (16) aufweist, bevorzugt 1 bis 4 %, besonders bevorzugt 2 %, und der zweite Glättungsfilter eine Filterlänge in einem Bereich von 7 bis 13 % der Länge des Eingangs-Reflektanzspektrums (16) aufweist, bevorzugt 8 bis 12 %, besonders bevorzugt von 9 bis 11 % und am meisten bevorzugt von 10 %.

3. System nach einem oder mehreren der vorhergehenden Ansprüche
**dadurch gekennzeichnet, dass**
die Zerlegung des Eingangs-Reflektanzspektrums (16) in konkave Teilbereiche unter Anwendung des ausgewählten Glättungsfilters folgende Schritte umfasst,

i) Durchführung einer ersten und einer zweiten Faltung des Reflektanzspektrums mittels Anwendung des ausgewählten Glättungsfilters auf das Eingangs-Reflektanzspektrum (16),

ii) Division des ersten einmal geglätteten Reflektanzspektrums durch das zweimalig geglättete erste Reflektanzspektrum und Division des zweiten geglätteten Reflektanzspektrums durch das zweimalig geglättete zweite Reflektanzspektrum, wobei in Abhängigkeit von dem ausgewählten Glättungsfilter entweder das erste geglättete Reflektanzspektrum durch das zweimalig geglättete erste Reflektanzspektrum dividiert wird oder das zweite geglättete Reflektanzspektrum durch das zweimalig geglättete zweite Reflektanzspektrum dividiert wird,

iii) Isolation aller Datenwerte, die größer sind als 1, aus dem Quotienten aus Schritt b) mittels binärer Codierung,

iv) Bestimmung aller Datenwerte aus dem Eingangs-Reflektanzspektrum (16), die ungleich 0 sind,

v) Bestimmung aller Datenwerte, die ungleich 0 sind, aus der Isolation aus Schritt iii), wodurch eine Codierung der Datenwerte durch Indizes erfolgt,

vi) Abfrage der Indizes mittels logischer Verknüpfung, wodurch voneinander beabstandete konvexe Teilbereiche des Eingangs-Reflektanzspektrums ermittelt werden, die von Stützstellen begrenzt werden, die gleichzeitig auch zwischen den konvexen Teilbereichen angeordnete, voneinander beabstandete konkave Teilbereiche begrenzen,

vii) Lineare Interpolation des Eingangs-Reflektanzspektrums (16) mittels der Stützstellen, die Grenzen zwischen konkaven und konvexen Teilbereichen des Eingangs-Reflektanzspektrums (16) darstellen,

viii) Addition des Eingangs-Reflektanzspektrums (16) zu einem Vektor gleicher Länge, dessen Komponenten alle gleich 1 sind,

ix) Subtraktion des Resultates der linearen Interpolation aus Schritt vii) von der Summe aus Schritt viii),

x) Bestimmung aller Datenwerte aus der Differenz aus Schritt ix), die in einem Intervall ]0, 1[ liegen, wodurch vorläufige konkave Teilbereiche erhalten werden.

4. System nach einem oder mehreren der vorhergehenden Ansprüchen
   **dadurch gekennzeichnet, dass**
   vor der Auswertung des Eingangs-Reflektanzspektrums (16) eine generische Interpolation des Eingangs-Reflektanzspektrums (16) auf äquidistante Wellenlängenabstände durchgeführt wird.

5. System nach einem oder mehreren der vorhergehenden Ansprüchen
   **dadurch gekennzeichnet, dass**
   die generische Interpolation des Eingangs-Reflektanzspektrums (16) unter Verwendung von splines erfolgt.

6. System zur Auswertung von Reflektanzspektren nach einem oder mehreren der vorhergehenden Ansprüchen
   **dadurch gekennzeichnet, dass**
   die generische Interpolation des Eingangs-Reflektanzspektrums (16) unter Verwendung von piecewise cubic hermite interpolating polynomial-Methoden erfolgt.

7. System nach einem oder mehreren der vorhergehenden Ansprüche
   **dadurch gekennzeichnet, dass**
   eine absolute Isolation der charakteristischen Absorptionsmerkmale durch eine Subtraktion des Eingangs-Reflektanzspektrums (16) von der Näherung einer Albedo des Eingangs-Reflektanzspektrums (16) erhalten wird.

8. System nach einem oder mehreren der vorhergehenden Ansprüche
   **dadurch gekennzeichnet, dass**
   eine relative Isolation der charakteristischen Absorptionsmerkmale durch eine Normierung des Eingangs-Reflektanzspektrums (16) mit der Näherung einer Albedo des Eingangs-Reflektanzspektrums (16) erhalten wird.

9. Verfahren zur Bestimmung von charakteristischen Absorptionsmerkmalen aus Reflektanzspektren mittels eines Systems umfassend eine Eingangseinheit, eine Rechnereinheit und eine Ausgabeeinheit, sowie eine Vorrichtung zur Aufnahme der Reflektanzspektren, wobei die Reflektanzspektren mit der Vorrichtung zur Aufnahme der Reflektanzspektren aufgenommen werden und mittels der Eingangseinheit zur Verarbeitung an die Rechnereinheit weitergeleitet werden und mittels der Rechnereinheit ausgewertet werden, und das Verfahren von einer Rechnereinheit eines Computers ausgeführt wird **umfassend die folgenden Schritte**

   a) Anwendung eines ersten Glättungsfilters mit einer ersten Filterlänge auf das Eingangs-Reflektanzspektrum (16), wodurch ein mit dem ersten Glättungsfilter geglättetes Reflektanzspektrum erhalten wird,

   b) Anwendung eines zweiten Glättungsfilters mit einer zweiten Filterlänge auf das Eingangs-Reflektanzspektrum (16), wodurch ein mit dem zweiten Glättungsfilter geglättetes Reflektanzspektrum erhalten wird,

   c) wiederholte Anwendung des ersten Glättungsfilters mit der ersten Filterlänge auf das mit dem ersten Glättungsfilter geglättete Reflektanzspektrum, wodurch ein zweimalig geglättetes erstes Reflektanzspektrum erhalten wird,

   d) wiederholte Anwendung des zweiten Glättungsfilters mit der zweiten Filterlänge auf das mit dem zweiten Glättungsfilter geglättete Reflektanzspektrum, wodurch ein zweimalig geglättetes zweites Reflektanzspektrum erhalten wird,

   e) Bildung einer ersten Differenz aus den Reflektanzspektren aus den Schritten a) und c) und Bildung einer zweiten Differenz aus den Reflektanzspektren aus den Schritten b) und d),

   f) Ermittlung einer ersten und einer zweiten Standardabweichung aus der Bildung der ersten und zweiten Differenz aus Schritt e),

   g) Vergleich der ersten und der zweiten Standardabweichung miteinander,

   h) Auswahl einer der beiden Glättungsfilter mit korrespondierender Filterlänge zur weiteren Verwendung für die Auswertung des Reflektanzspektrums, wobei derjenige der beiden Glättungsfilter ausgewählt wird, der die größere Standardabweichung aufweist,

   i) Zerlegung des Eingangs-Reflektanzspektrums (16) in konkave Teilbereiche unter Anwendung des ausgewählten Glättungsfilters,

   j) Bestimmung von Minima (10) der konkaven Teilbereiche aus Schritt i),

k) Bestimmung einer unteren Hülle (18) des Eingangs-Reflektanzspektrums (16) durch lineare Interpolation der Minima (10) aus j),

l) Subtraktion der unteren Hülle (18) aus Schritt k) vom Eingangs-Reflektanzspektrum (16), wodurch erste konvexe Teilstücke des Eingangs-Reflektanzspektrums (16) erhalten werden, die durch eine 0 voneinander separiert sind,

m) Bestimmung eines ersten lokalen Maximums (12) in jedem der konvexen Teilstücke aus Schritt l),

n) Verwendung der ersten lokalen Maxima (12) als Knotenpunkte zur Bestimmung einer vorläufigen oberen Hülle (20) des Eingangs-Reflektanzspektrum (16) mittels linearer Interpolation, wodurch eine erste Näherung einer Albedo des Eingangs-Reflektanzspektrums (16) erhalten wird,

o) Subtraktion der vorläufigen oberen Hülle (20) aus Schritt n) vom Eingangs-Reflektanzspektrum (16), wodurch zweite konvexe Teilstücke des Eingangs-Reflektanzspektrums (16) erhalten werden, die durch eine 0 voneinander separiert sind,

p) Bestimmung eines zweiten Maximums (14) in jedem der zweiten konvexen Teilstücke aus Schritt o), wobei die zweiten Maxima (14) in Kombination mit den ersten Maxima (12) eine verbesserte Nachbildung einer Albedo des Eingangs-Reflektanzspektrums (16) ermöglichen im Vergleich zu den ersten Maxima (12),

q) Wiederholung der Schritte n) bis p), bis eine Abweichung zwischen der vorläufigen oberen Hülle (20) und einem oberen Perimeter des Eingangs-Reflektanzspektrums (16) einen festgelegten Wert unterschreitet, wodurch eine Näherung einer Albedo des Eingangs-Reflektanzspektrums (16) erhalten wird mit Hilfe derer eine Isolation der charakteristischen Absorptionsmerkmale erfolgt.

10. Verfahren gemäß dem vorherigen Anspruch **dadurch gekennzeichnet, dass**

die Zerlegung des Eingangs-Reflektanzspektrums (16) in konkave Teilbereiche unter Anwendung des ausgewählten Glättungsfilters folgende Schritte umfasst:

i. Durchführung einer ersten und einer zweiten Faltung des Reflektanzspektrums mittels Anwendung des ausgewählten Glättungsfilters auf das Eingangs-Reflektanzspektrum (16),

ii. Division des geglätteten Reflektanzspektrums nach Schritt a) oder b) durch das zweimalig geglättete Reflektanzspektrum nach Schritt c) oder d), wobei in Abhängigkeit von dem ausgewählten Glättungsfilter gemäß Schritt h) entweder das geglättete Reflektanzspektrum aus Schritt a) durch das zweimalig geglättete Reflektanzspektrum aus Schritt c) dividiert wird oder das geglättete Reflektanzspektrum aus Schritt b) durch das zweimalig geglättete Reflektanzspektrum aus Schritt d) dividiert wird,

iii. Isolation aller Datenwerte, die größer sind als 1, aus dem Quotienten aus Schritt ii) mittels binärer Codierung,

iv. Bestimmung aller Datenwerte aus dem Eingangs-Reflektanzspektrum (16), die ungleich 0 sind,

v. Bestimmung aller Datenwerte, die ungleich 0 sind, aus der Isolation aus Schritt iii), wodurch eine Codierung der Datenwerte durch Indizes erfolgt

vi. Abfrage der Indizes mittels logischer Verknüpfung, wodurch voneinander beabstandete konvexe Teilbereiche des Eingangs-Reflektanzspektrums (16) ermittelt werden, die von Stützstellen begrenzt werden, die gleichzeitig auch zwischen den konvexen Teilbereichen angeordnete, voneinander beabstandete konkave Teilbereiche begrenzen,

vii. Lineare Interpolation des Eingangs-Reflektanzspektrums (16) mittels der Stützstellen aus Schritt vi),

viii. Addition des Eingangs-Reflektanzspektrums (16) zu einem Vektor gleicher Länge, dessen Komponenten alle gleich 1 sind,

ix. Subtraktion des Resultates der linearen Interpolation aus Schritt o) von der Summe aus Schritt viii),

x. Bestimmung aller Datenwerte aus der Differenz aus Schritt ix), die in einem Intervall ]0, 1[ liegen, wodurch vorläufige konkaven Teilbereiche erhalten werden.

**Claims**

1. A system for the evaluation of reflectance spectrums by determining characteristic absorption features of an input reflectance spectrum (16), comprising an input unit, a computer unit, and an output unit, as well as a device for recording the reflectance spectrums,

**characterized in that**

an evaluation of the input reflectance spectrum (16), recorded by the device for recording the reflectance spectrums, by the computer unit comprises the following steps:

a) applying a first smoothing filter with a first filter length to the input reflectance spectrum (16), whereby a reflectance spectrum smoothed by the first smoothing filter is obtained,

b) applying a second smoothing filter with a second filter length to the input reflectance spectrum (16), whereby a reflectance spectrum smoothed by the second smoothing filter is obtained,

c) again applying the first smoothing filter with the first filter length to the reflectance spectrum smoothed by the first smoothing filter, whereby a twice-smoothed first reflectance spectrum is obtained,

d) again applying the second smoothing filter with the second filter length to the reflectance spectrum smoothed by the second smoothing filter, whereby a twice-smoothed second reflectance spectrum is obtained,

e) calculating a first difference from the reflectance spectrums from steps a) and c) and calculating a second difference from the reflectance spectrums from steps b) and d),

f) determining a first and a second standard deviation from the calculation of the first and second differences from step e),

g) comparing the first standard deviation and the second standard deviation with one another,

h) selecting one of the two smoothing filters with corresponding filter length for the further use for evaluating the reflectance spectrum, wherein, from the two smoothing filters, the smoothing filter having the greatest standard deviation is selected,

i) partitioning the input reflectance spectrum (16) into concave sections by applying the selected smoothing filter,

j) determining minima (10) of the concave sections from step i),

k) determining a lower envelope (18) of the input reflectance spectrum (16) by linearly interpolating the minima (10) from j),

l) subtracting the lower envelope (18) from step k) from the input reflectance spectrum (16), whereby first convex portions of the input reflectance spectrum (16) are obtained, which are separated by a 0 from one another,

m) determining a first local maximum (12) in each of the convex portions from step 1),

n) using the first local maxima (12) as nodal points for determining a preliminary upper envelope (20) of the input reflectance spectrum (16) by linear interpolation, whereby a first approximation of an albedo of the input reflectance spectrum (16) is obtained,

o) subtracting the preliminary upper envelope (20) from step n) from the input reflectance spectrum (16), whereby second convex portions of the input reflectance spectrum (16) are obtained, which are separated by a 0 from one another,

p) determining a second maximum (14) in each of the two convex portions from step o), wherein the second maxima (14) in combination with the first maxima (12) enable an improved reproduction of an albedo of the input reflectance spectrum (16) in comparison to the first maxima (12),

q) repeating steps n) to p) until a deviation between the preliminary upper envelope (20) and an upper perimeter of the input reflectance spectrum (16) falls below a predetermined value, whereby an approximation of an albedo of the input reflectance spectrum (16) is obtained, by means of which an isolation of the characteristic absorption features occurs.

2. The system according to claim 1,
**characterized in that**
the first smoothing filter has a filter length in a range of 0.5 to 6% of the length of the input reflectance spectrum (16), preferably 1 to 4%, particularly preferably 2%, and the second smoothing filter has a filter length in a range of 7 to 13% of the length of the input reflectance spectrum (16), preferably 8 to 12%, particularly preferably 9 to 11%, and most preferably 10%.

3. The system according to any one or more of the preceding claims,
**characterized in that**
the partitioning of the input reflectance spectrum (16) into concave sections by applying the selected smoothing filter comprises the following steps,

i) performing a first and a second folding of the reflectance spectrum by applying the selected smoothing filter to the input reflectance spectrum (16),

ii) dividing the first once-smoothed reflectance spectrum by the twice-smoothed first reflectance spectrum, and dividing the second smoothed reflectance spectrum by the twice-smoothed second reflectance spectrum, wherein, depending on the selected smoothing filter, either the first smoothed reflectance spectrum is divided by the twice-smoothed first reflectance spectrum, or the second smoothed reflectance spectrum is divided by the twice-smoothed second reflectance spectrum,

iii) isolating all the data values greater than 1 from the quotient from step b) by binary coding,

iv) determining all the data values from the input reflectance spectrum (16), which are not equal to 0,

v) determining all the data values which are not equal to 0 from the isolation from step iii), whereby a coding of the data values by indexes occurs,

vi) querying of the indexes by logic operation, whereby mutually separated convex sections of the input reflectance spectrum are determined, which are delimited by supporting points which at the same time also delimit mutually separated concave sections arranged between the convex sections,

vii) linearly interpolating the input reflectance spectrum (16) by means of the supporting points which represent boundaries between concave and convex sections of the input reflectance spectrum (16),

viii) adding the input reflectance spectrum (16) to a vector of equal length, of which the components are all equal to 1,

ix) subtracting the result of the linear interpolation from step vii) from the sum from step viii),

x) determining all the data values from the difference from step ix), which are in an interval ] 0,1[, whereby preliminary concave sections are obtained.

4. The system according to any one or more of the preceding claims,
**characterized in that**,
before the evaluation of the input reflectance spectrum (16), a generic interpolation of the input reflectance spectrum (16) to equidistant wavelength spacings is carried out.

5. The system according to any one or more of the preceding claims,
**characterized in that**
the generic interpolation of the input reflectance spectrum (16) occurs using splines.

6. A system for the evaluation of reflectance spectrums according to any one or more of the preceding claims,
**characterized in that**
the generic interpolation of the input reflectance spectrum (16) occurs using piecewise cubic hermite interpolating polynomial methods.

7. The system according to any one or more of the preceding claims,
**characterized in that**
an absolute isolation of the characteristic absorption features is obtained by subtracting the input reflectance spectrum (16) from the approximation of an albedo of the input reflectance spectrum (16).

8. The system according to any one or more of the preceding claims,
**characterized in that**
a relative isolation of the characteristic absorption features is obtained by normalizing the input reflectance spectrum (16) with the approximation of an albedo of the input reflectance spectrum (16).

9. A method for the determination of characteristic absorption features from reflectance spectrums by means of a system comprising an input unit, a computer unit, and an output unit, as well as a device for recording the reflectance spectrums, wherein the reflectance spectrums are recorded by the device for recording the reflectance spectrums and are transmitted by means of the input unit for processing to the computer unit and are evaluated by means of the computer unit, and the method is carried out by a computer unit of a computer,
comprising the following steps:

a) applying a first smoothing filter with a first filter length to the input reflectance spectrum (16), whereby a reflectance spectrum smoothed by the first smoothing filter is obtained,
b) applying a second smoothing filter with a second filter length to the input reflectance spectrum (16), whereby a reflectance spectrum smoothed by the second smoothing filter is obtained,
c) again applying the first smoothing filter with the first filter length to the reflectance spectrum smoothed by the first smoothing filter, whereby a twice-smoothed first reflectance spectrum is obtained,
d) again applying the second smoothing filter with the second filter length to the reflectance spectrum smoothed by the second smoothing filter, whereby a twice-smoothed second reflectance spectrum is obtained,
e) calculating a first difference from the reflectance spectrums from steps a) and c) and calculating a second difference from the reflectance spectrums from steps b) and d),
f) determining a first and a second standard deviation from the calculation of the first and second differences from step e),
g) comparing the first standard deviation and the second standard deviation with one another,
h) selecting one of the two smoothing filters with corresponding filter length for the further use for evaluating the reflectance spectrum, wherein, from the two smoothing filters, the smoothing filter having the greatest standard deviation is selected,
i) partitioning the input reflectance spectrum (16) into concave sections by applying the selected smoothing filter,
j) determining minima (10) of the concave sections from step i),
k) determining a lower envelope (18) of the input reflectance spectrum (16) by linearly interpolating the minima (10) from j),
l) subtracting the lower envelope (18) from step k) from the input reflectance spectrum (16), whereby first convex portions of the input reflectance spectrum (16) are obtained, which are separated by a 0 from one another,
m) determining a first local maximum (12) in each of the convex portions from step 1),
n) using the first local maxima (12) as nodal points for determining a preliminary upper envelope (20) of the input reflectance spectrum (16) by linear interpolation, whereby a first approximation of an albedo of the input reflectance spectrum (16) is obtained,

o) subtracting the preliminary upper envelope (20) from step n) from the input reflectance spectrum (16), whereby second convex portions of the input reflectance spectrum (16) are obtained, which are separated by a 0 from one another,

p) determining a second maximum (14) in each of the two convex portions from step o), wherein the second maxima (14) in combination with the first maxima (12) enable an improved reproduction of an albedo of the input reflectance spectrum (16) in comparison to the first maxima (12),

q) repeating steps n) to p) until a deviation between the preliminary upper envelope (20) and an upper perimeter of the input reflectance spectrum (16) falls below a predetermined value, whereby an approximation of an albedo of the input reflectance spectrum (16) is obtained, by means of which an isolation of the characteristic absorption features occurs.

10. The method according to the preceding claim, **characterized in that**
the partitioning of the input reflectance spectrum (16) into concave sections by applying the selected smoothing filter comprises the following steps:

i) performing a first and a second folding of the reflectance spectrum by applying the selected smoothing filter to the input reflectance spectrum (16),

ii) dividing the smoothed reflectance spectrum after step a) or b) by the twice-smoothed first reflectance spectrum after step c) or d), wherein, depending on the selected smoothing filter according to step h), either the smoothed reflectance spectrum from step a) is divided by the twice-smoothed reflectance spectrum from step c), or the smoothed reflectance spectrum from step b) is divided by the twice-smoothed reflectance spectrum from step d),

ii) isolating all the data values greater than 1 from the quotient from step ii) by binary coding,

iv) determining all the data values from the input reflectance spectrum (16), which are not equal to 0,

v) determining the all the data values which are not equal to 0 from the isolation from step iii), whereby a coding of the data values by indexes occurs,

vi) querying of the indexes by logic operation, whereby mutually separated convex sections of the input reflectance spectrum (16) are determined, which are delimited by supporting points which at the same time also delimit mutually separated concave sections arranged between the convex sections,

vii) linearly interpolating the input reflectance spectrum (16) by means of the supporting points from step vi),

viii) adding the input reflectance spectrum (16) to a vector of equal length, of which the components are all equal to 1,

ix) subtracting the result of the linear interpolation from step o) from the sum from step viii),

x) determining all the data values from the difference from step ix), which are in an interval ] 0, 1[, whereby preliminary concave sections are obtained.

**Revendications**

1.  Système pour l'évaluation de spectres de réflexion par le biais de la détermination de signes d'absorption caractéristiques d'un spectre de réflexion d'entrée (16) comprenant une unité d'entrée, une unité de calcul et une unité de restitution, ainsi qu'un dispositif pour l'absorption des spectres de réflexion **caractérisé en ce que**
une évaluation du spectre de réflexion d'entrée (16) absorbé par le biais du dispositif pour l'absorption des spectres de réflexion par le biais de l'unité de calcul comprend les étapes suivantes :

a) application d'un premier filtre de lissage avec une première longueur de filtre sur le spectre de réflexion d'entrée (16), moyennant quoi un spectre de réflexion lissé avec le premier filtre de lissage est obtenu,

b) application d'un second filtre de lissage avec une seconde longueur de filtre sur le spectre de réflexion d'entrée (16), moyennant quoi un spectre de réflexion lissé avec le second filtre de lissage est obtenu,

c) application répétée du premier filtre de lissage avec la première longueur de filtre sur le spectre de réflexion lissé avec le premier filtre de lissage, moyennant quoi un premier spectre de réflexion lissé deux fois est obtenu,

d) application répétée du second filtre de lissage avec la seconde longueur de filtre sur le spectre de réflexion lissé avec le second filtre de lissage, moyennant quoi un second spectre de réflexion lissé deux fois est obtenu,

e) formation d'une première différence à partir des spectres de réflexion issus des étapes a) et c) et formation d'une seconde différence à partir des spectres de réflexion issus des étapes b) et d),

f) détermination d'un premier et d'un second écart type à partir de la formation de la première et de la seconde différence à partir de l'étape e),

g) comparaison du premier et du second écart type entre eux,

h) sélection d'un des deux filtres de lissage avec une longueur de filtre correspondante en vue d'une autre utilisation pour l'évaluation du spectre de réflexion, dans lequel est sélectionné celui des deux filtres de lissage qui présente l'écart type le plus grand,

i) décomposition du spectre de réflexion d'entrée (16) en zones partielles concaves en appliquant le filtre de lissage sélectionné,

j) détermination de minima (10) des zones partielles concaves issues de l'étape i),

k) détermination d'une enveloppe inférieure (18) du spectre de réflexion d'entrée (16) par le biais d'une interpolation linéaire des minima (10) issus de j),

l) soustraction de l'enveloppe inférieure (18) issue de l'étape k) au spectre de réflexion d'entrée (16), moyennant quoi des premières portions convexes du spectre de réflexion d'entrée (16) sont obtenues, lesquelles sont séparées entre elles par un 0,

m) détermination d'un premier maximum local (12) dans chacune des portions convexes issues de l'étape 1),

n) utilisation des premiers maxima locaux (12) en tant que jonctions pour la détermination d'une enveloppe supérieure temporaire (20) du spectre de réflexion d'entrée (16) au moyen d'une interpolation linéaire, moyennant quoi une première approximation d'un albédo du spectre de réflexion d'entrée (16) est obtenue,

o) soustraction de l'enveloppe supérieure temporaire (20) issue de l'étape n) au spectre de réflexion d'entrée (16), moyennant quoi des secondes portions convexes du spectre de réflexion d'entrée (16) sont obtenues, lesquelles sont séparées entre elles par un 0,

p) détermination d'un second maximum (14) dans chacune des secondes portions convexes issues de l'étape o), dans lequel les seconds maxima (14) permettent en combinaison avec les premiers maxima (12) une reproduction améliorée d'un albédo du spectre de réflexion d'entrée (16) en comparaison des premiers maxima (12),

q) répétition des étapes n) à p), jusqu'à ce qu'un écart entre l'enveloppe supérieure temporaire (20) et un périmètre supérieur du spectre de réflexion d'entrée (16) devienne inférieur à une valeur fixée, moyennant quoi une approximation d'un albédo du spectre de réflexion d'entrée (16) est obtenue à l'aide duquel il s'ensuit un isolement des signes d'absorption caractéristiques.

2. Système selon la revendication 1,
**caractérisé en ce que**
le premier filtre de lissage présente une longueur de filtre dans une plage de 0,5 à 6 % de la longueur du spectre de réflexion d'entrée (16), de préférence de 1 à 4 %, plus préférablement de 2 %, et le second filtre de lissage présente une longueur de filtre dans une plage de 7 à 13 % de la longueur du spectre de réflexion d'entrée (16), de préférence de 8 à 12 %, plus préférablement de 9 à 11 % et le plus préférablement de 10 %.

3. Système selon l'une quelconque ou plusieurs des revendications précédentes,
**caractérisé en ce que**
la décomposition du spectre de réflexion d'entrée (16) en secteurs concaves en appliquant le filtre de lissage sélectionné comprend les étapes suivantes :

i) réalisation d'une première et d'une seconde circonvolution du spectre de réflexion au moyen de l'application du filtre de lissage sélectionné sur le spectre de réflexion d'entrée (16),

ii) division du premier spectre de réflexion lissé une fois par le biais du premier spectre de réflexion lissé deux fois et division du second spectre de réflexion lissé par le biais du second spectre de réflexion lissé deux fois, dans lequel en fonction du filtre de lissage sélectionné soit le premier spectre de réflexion lissé est divisé par le premier spectre de réflexion lissé deux fois soit le second spectre de réflexion lissé est divisé par le second spectre de réflexion lissé deux fois,

iii) isolement de toutes les valeurs de données qui sont supérieures à 1 à partir du quotient issu de l'étape b) au moyen d'un codage binaire,

iv) détermination de toutes les valeurs de données issues du spectre de réflexion d'entrée (16) qui ne sont pas égales à 0,

v) détermination de toutes les valeurs de données qui ne sont pas égales à 0 à partir de l'isolement issu de l'étape iii), moyennant quoi il s'ensuit un codage des valeurs de données par le biais d'indices,

vi) interrogation des indices au moyen d'une connexion logique, moyennant quoi des secteurs convexes du spectre de réflexion d'entrée à distance les uns des autres sont déterminés, qui sont délimités par des points d'appui qui délimitent en même temps également des secteurs concaves à distance les uns des autres disposés entre les secteurs convexes,

vii) interpolation linéaire du spectre de réflexion d'entrée (16) au moyen des points d'appui qui représentent les limites entre des secteurs concaves et convexes du spectre de réflexion d'entrée (16),

viii) addition du spectre de réflexion d'entrée (16) à un vecteur de même longueur dont les composants sont tous égaux à 1,

ix) soustraction du résultat de l'interpolation linéaire issue de l'étape vii) à la somme issue de l'étape viii),

x) détermination de toutes les valeurs de données à partir de la différence à partir de l'étape ix), qui se trouvent dans un intervalle ]0, 1[, moyennant quoi des secteurs concaves temporaires sont obtenus.

4. Système selon l'une quelconque ou plusieurs des revendications précédentes,
   **caractérisé en ce que**
   avant l'évaluation du spectre de réflexion d'entrée (16) une interpolation générique du spectre de réflexion d'entrée (16) est réalisée sur des espacements entre longueurs d'onde équidistants.

5. Système selon l'une quelconque ou plusieurs des revendications précédentes,
   **caractérisé en ce que**
   il s'ensuit l'interpolation générique du spectre de réflexion d'entrée (16) en utilisant des splines.

6. Système pour l'évaluation de spectres de réflexion selon l'une quelconque ou plusieurs des revendications précédentes,
   **caractérisé en ce que**
   l'interpolation générique du spectre de réflexion d'entrée (16) se fait en utilisant des méthodes polynomiales d'interpolation d'Hermite cubique et par morceaux.

7. Système selon l'une quelconque ou plusieurs des revendications précédentes,
   **caractérisé en ce que**
   un isolement absolu des signes d'absorption caractéristiques est obtenu par le biais d'une soustraction du spectre de réflexion d'entrée (16) à l'approximation d'un albédo du spectre de réflexion d'entrée (16).

8. Système selon l'une quelconque ou plusieurs des revendications précédentes,
   **caractérisé en ce que**
   un isolement relatif des signes d'absorption caractéristiques est obtenu par le biais d'une normalisation du spectre de réflexion d'entrée (16) avec l'approximation d'un albédo du spectre de réflexion d'entrée (16).

9. Procédé pour la détermination de signes d'absorption caractéristiques en provenance de spectres de réflexion au moyen d'un système comprenant une unité d'entrée, une unité de calcul et une unité de restitution, ainsi qu'un dispositif pour l'absorption de spectres de réflexion, dans lequel les spectres de réflexion sont absorbés avec le dispositif pour l'absorption des spectres de réflexion et redirigés vers l'unité de calcul au moyen de l'unité d'entrée pour un traitement et évalués au moyen de l'unité de calcul et le procédé est réalisé par une unité de calcul d'un ordinateur
comprenant les étapes suivantes

a) application d'un premier filtre de lissage avec une première longueur de filtre sur le spectre de réflexion d'entrée (16), moyennant quoi un spectre de réflexion lissé avec le premier filtre de lissage est obtenu,

b) application d'un second filtre de lissage avec une seconde longueur de filtre sur le spectre de réflexion d'entrée (16), moyennant quoi un spectre de réflexion lissé avec le second filtre de lissage est obtenu,

c) application répétée du premier filtre de lissage avec la première longueur de filtre sur le spectre de réflexion lissé avec le premier filtre de lissage, moyennant quoi un premier spectre de réflexion lissé deux fois est obtenu,

d) application répétée du second filtre de lissage avec la seconde longueur de filtre sur le spectre de réflexion lissé avec le second filtre de lissage, moyennant quoi un second spectre de réflexion lissé deux fois est obtenu,

e) formation d'une première différence à partir des spectres de réflexion issus des étapes a) et c) et formation d'une seconde différence à partir des spectres de réflexion issus des étapes b) et d),

f) détermination d'un premier et d'un second écart type à partir de la formation de la première et de la seconde différence issue de l'étape e),

g) comparaison du premier et du second écart type entre eux,

h) sélection d'un des deux filtres de lissage avec une longueur de filtre correspondante en vue d'une autre utilisation pour l'évaluation du spectre de réflexion, dans lequel est sélectionné celui des deux filtres de lissage qui présente l'écart type le plus grand,

i) décomposition du spectre de réflexion d'entrée (16) en zones partielles concaves en appliquant le filtre de lissage sélectionné,

j) détermination de minima (10) des zones partielles concaves issues de l'étape i),

k) détermination d'une enveloppe inférieure (18) du spectre de réflexion d'entrée (16) par le biais d'une interpolation linéaire des minima (10) issus de j),

l) soustraction de l'enveloppe inférieure (18) de l'étape k) au spectre de réflexion d'entrée (16), moyennant quoi des premières portions convexes du spectre de réflexion d'entrée (16) sont obtenues, lesquelles sont séparées entre elles par un 0,

m) détermination d'un premier maximum local (12) dans chacune des portions convexes issues de l'étape 1),

n) utilisation des premiers maxima locaux (12) en tant que jonctions pour la détermination d'une enveloppe supérieure temporaire (20) du spectre de réflexion d'entrée (16) au moyen d'une interpolation linéaire, moyennant quoi une première approximation d'un albédo du spectre de réflexion d'entrée (16) est obtenue,

o) soustraction de l'enveloppe supérieure temporaire (20) issue de l'étape n) au spectre de réflexion d'entrée (16), moyennant quoi des secondes portions convexes du spectre de réflexion d'entrée (16) sont obtenues, lesquelles sont séparées entre elles par un 0,

p) détermination d'un second maximum (14) dans chacune des secondes portions convexes issues de l'étape o), dans lequel les seconds maxima (14) permettent en combinaison avec les premiers maxima (12) une reproduction améliorée d'un albédo du spectre de réflexion d'entrée (16) en comparaison des premiers maxima (12),

q) répétition des étapes n) à p), jusqu'à ce qu'un écart entre l'enveloppe supérieure temporaire (20) et un périmètre supérieur du spectre de réflexion d'entrée (16) devienne inférieur à une valeur fixée, moyennant quoi une approximation d'un albédo du spectre de réflexion d'entrée (16) est obtenue à l'aide de laquelle il s'ensuit un isolement des signes d'absorption caractéristiques.

10. Procédé selon la revendication précédente, **caractérisé en ce que**
la décomposition du spectre de réflexion d'entrée (16) en secteurs concaves en appliquant le filtre de lissage sélectionné comprend les étapes suivantes :

i) réalisation d'une première et d'une seconde circonvolution du spectre de réflexion au moyen de l'application du filtre de lissage sélectionné sur le spectre de réflexion d'entrée (16),

ii) division du spectre de réflexion lissé selon l'étape a) ou b) par le biais du spectre de réflexion lissé deux fois selon l'étape c) ou d), dans lequel en fonction du filtre de lissage sélectionné selon l'étape h) soit le spectre de réflexion lissé issu de l'étape a) est divisé par le spectre de réflexion lissé deux fois issu de l'étape c) soit le spectre de réflexion lissé issu de l'étape b) est divisé par le spectre de réflexion lissé deux fois issu de l'étape d),

iii) isolement de toutes les valeurs de données qui sont supérieures à 1 à partir du quotient issu de l'étape ii) au moyen d'un codage binaire,

iv) détermination de toutes les valeurs de données à partir du spectre de réflexion d'entrée (16) qui ne sont pas égales à 0,

v) détermination de toutes les valeurs de données qui ne sont pas égales à 0 à partir de l'isolement issu de l'étape iii), moyennant quoi il s'ensuit un codage des valeurs de données par le biais d'indices,

vi) interrogation des indices au moyen d'une connexion logique, moyennant quoi des secteurs convexes du spectre de réflexion d'entrée (16) à distance les uns des autres sont déterminés, qui sont délimités par des points d'appui qui délimitent en même temps également des secteurs concaves à distance les uns des autres disposés entre les secteurs convexes,

vii) interpolation linéaire du spectre de réflexion d'entrée (16) au moyen des points d'appui issus de l'étape vi),

viii) addition du spectre de réflexion d'entrée (16) à un vecteur de même longueur dont les composants sont tous égaux à 1,

ix) soustraction du résultat de l'interpolation linéaire issue de l'étape O) à la somme à issue de l'étape viii),

x) détermination de toutes les valeurs de données à partir de la différence issue de l'étape ix), qui se trouvent dans un intervalle ]0, 1[, moyennant quoi des portions concaves temporaires sont obtenues.

Fig. 1

Fig. 2:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Symbolic representation of hyperspectral data. **PIECH et al.** Applied Optics. Optical Society of America, 01. Januar 1987
- **R. KOKALY et al.** Spectroscopic Determination of Leaf Biochemistry Usind Band-Depth Analysis of Absorption Features and Stepwise Multiple Linear Regression. *Remote sensing of Environment,* 01. Marz 1999, vol. 67 (3), 267-287

- **ROGER N. CLARK et al.** *N88-13170 Automatic continuum analysis of reflectance spectra,* 01. Januar 1987